# EUROPEAN PATENT APPLICATION

(11) **EP 4 412 281 A1**
(43) Date of publication of application: **07.08.2024**
(21) Application number: 21959443.9
(22) Date of filing: 30.09.2021
(51) Int. Cl.: H04W 16/28

(54) **TERMINAL, WIRELESS COMMUNICATION METHOD AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); SUN, Weiqi, Beijing 100190 (CN)
(74) Representative: Hoffmann Eitle
(86) International application number: PCT/JP2021/036283
(87) International publication number: WO 2023/053408

(57) **Abstract**

A terminal according to one aspect of the present disclosure includes a receiving section that receives one or more transmission configuration indication (TCI) state lists for uplink in one or more cells of a plurality of cells and that receives an indication of one or more TCI states in the one or more TCI state lists, and a control section that applies, to a part or all of the plurality of cells, at least one parameter of a pathloss reference signal and a transmission power control parameter based on the one or more TCI states. According to one aspect of the present disclosure, it is possible to appropriately determine a TCI state/PL-RS/TPC parameter for a plurality of cells/CCs.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), a user terminal (terminal, User Equipment (UE)) that controls transmission/reception processing on the basis of information related to quasi-co-location (QCL) (QCL assumption/Transmission Configuration Indication (TCI) state/spatial relation) is under study.

A case that a configured/activated/indicated TCI state is applied to multiple types of signals (channels/RSs) is under study. However, a method for determining a TCI state/pathloss reference signal (PL-RS)/transmission power control (TPC) parameter for a plurality of cells/component carriers (CCs) has not been fully studied. Unless the determination method is appropriate, communication quality reduction, throughput reduction, and the like may occur.

Thus, an object of the present disclosure is to provide a terminal, a radio communication method, and a base station that appropriately determine a TCI state/PL-RS/TPC parameter for a plurality of cells/CCs. Solution to Problem

A terminal according to one aspect of the present disclosure includes a receiving section that receives one or more transmission configuration indication (TCI) state lists for uplink in one or more cells of a plurality of cells and that receives an indication of one or more TCI states in the one or more TCI state lists, and a control section that applies, to a part or all of the plurality of cells, at least one parameter of a pathloss reference signal and a transmission power control parameter based on the one or more TCI states. Advantageous Effects of Invention

According to one aspect of the present disclosure, it is possible to appropriately determine a TCI state/PL-RS/TPC parameter for a plurality of cells/CCs.

### Brief Description of Drawings

[FIG. 1] FIG. 1 is a diagram to show an example of simultaneous beam update for a plurality of CCs.
[FIG. 2] FIGS. 2A and 2B are each a diagram to show an example of a unified/common TCI framework.
[FIG. 3] FIGS. 3A and 3B are examples of a CC-specific TCI state pool and a CC-common TCI state pool, respectively.
[FIG. 4] FIGS. 4A and 4B are each a diagram to show an example of a TCI state in a CC-specific TCI state pool.
[FIG. 5] FIGS. 5A and 5B are each a diagram to show an example of a TCI state in a CC-common TCI state pool.
[FIG. 6] FIGS. 6A and 6B are each a diagram to show an example of a CC-specific RS in a TCI state.
[FIG. 7] FIGS. 7A and 7B are each a diagram to show an example of a CC-common RS in a TCI state.
[FIG. 8] FIGS. 8A and 8B are each a diagram to show an example of a CC-specific RS in a separate TCI state pool.
[FIG. 9] FIGS. 9A and 9B are each a diagram to show an example of a CC-common RS in a separate TCI state pool.
[FIG. 10] FIGS. 10A and 10B are each a diagram to show an example of an association between TCI code points and TCI states.
[FIG. 11] FIGS. 11A and 11B are each a diagram to show an example of a CC-specific PL-RS.
[FIG. 12] FIGS. 12A and 12B are each a diagram to show an example of a CC-common PL-RS.
[FIG. 13] FIGS. 13A and 13B are each a diagram to show an example of new QCL information.
[FIG. 14] FIG. 14 is a diagram to show another example of the new QCL information.
[FIG. 15] FIG. 15 is a diagram to show an example of a schematic structure of a radio communication system according to one embodiment.
[FIG. 16] FIG. 16 is a diagram to show an example of a structure of a base station according to one embodiment.
[FIG. 17] FIG. 17 is a diagram to show an example of a structure of a user terminal according to one embodiment.
[FIG. 18] FIG. 18 is a diagram to show an example of a hardware structure of the base station and the user terminal according to one embodiment.
[FIG. 19] FIG. 19 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) in a UE regarding at least one of a signal and a channel (which is expressed as a signal/channel) based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS to have a relationship of QCL type X with (a DMRS for) a certain channel/signal, and this RS may be referred to as a QCL source of QCL type X in the TCI state.

### (Simultaneous Beam Update for Plurality of CCs)

In Rel. 16, one MAC CE can update beam indexes (TCI states) for a plurality of CCs.

Up to two applicable CC lists (for example, applicable-CC-list) can be configured for the UE by RRC. When two applicable CC lists are configured, the two applicable CC lists may correspond to respective intra-band CA in FR1 and intra-band CA in FR2.

A network may activate and deactivate, by transmitting a TCI state activation/deactivation MAC CE for a UE-specific PDSCH (TCI states Activation/Deactivation for UE-specific PDSCH MAC CE), configured TCI states in a set of serving cells or serving cells configured in simultaneous TCI update list 1 (simultaneousTCI-UpdateList1) or simultaneous TCI update list 2 (simultaneousTCI-UpdateList2). If an indicated serving cell is configured as a part of simultaneous TCI update list 1 or simultaneous TCI update list 2, the MAC CE is applied to all serving cells configured in the set of simultaneous TCI update list 1 or simultaneous TCI update list 2.

The network may indicate, by transmitting a TCI state indication MAC CE for a UE-specific PDCCH (TCI states Indication for UE-specific PDCCH MAC CE), configured TCI states in a set of serving cells or serving cells configured in simultaneous TCI update list 1 (simultaneousTCI-UpdateList1) or simultaneous TCI update list 2 (simultaneousTCI-UpdateList2). If an indicated serving cell is configured as a part of simultaneous TCI update list 1 or simultaneous TCI update list 2, the MAC CE is applied to all serving cells configured in the set of simultaneous TCI update list 1 or simultaneous TCI update list 2.

A TCI state activation MAC CE for a PDCCH activates TCI states associated with the same CORESET ID on all BWPs/CCs in the applicable CC list.

A TCI state activation MAC CE for a PDSCH activates TCI states on all BWPs/CCs in the applicable CC list.

A spatial relation activation MAC CE for an A-SRS/SP-SRS activates a spatial relation associated with the same SRS resource ID on all BWPs/CCs in the applicable CC list.

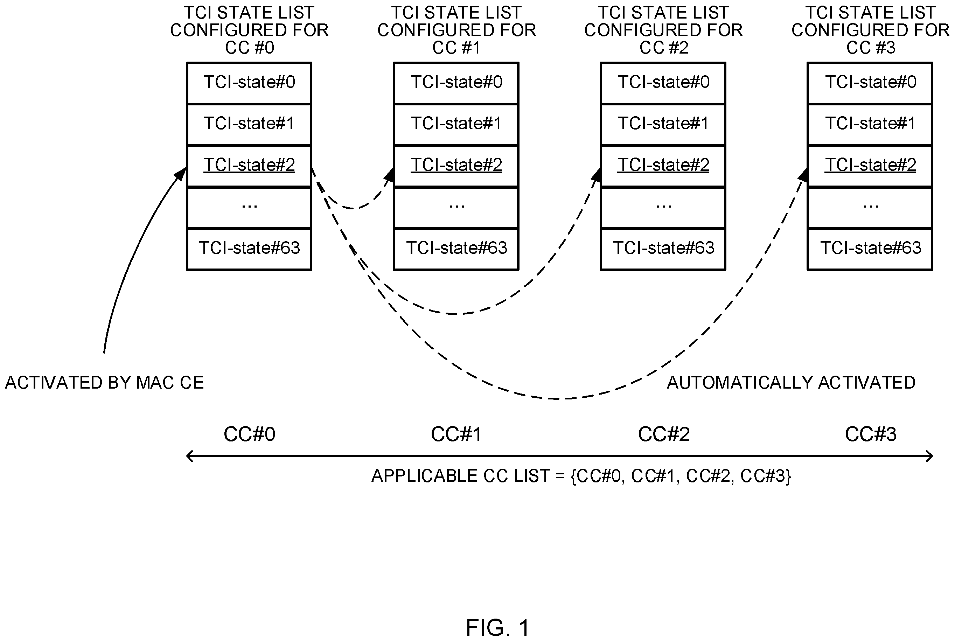

In an example of FIG. 1, an applicable CC list indicating CC #0, CC #1, CC #2, and CC #3 and a list indicating 64 TCI states for a CORESET or a PDSCH on each CC are configured for the UE. When one TCI state on CC #0 is activated by the MAC CE, a corresponding TCI state is activated on CC #1, CC #2, and CC #3.

A case that such simultaneous beam update is only applicable to a single TRP case is under study.

For the PDSCH, the UE may be based on procedure A below.

### [Procedure A]

In one CC/DL BWP or in one set of CCs/BWPs, the UE receives an activation command for mapping up to 8 TCI states to code points of a DCI field (TCI field). When one set of TCI state IDs is activated for one set of CCs/DL BWPs, then an applicable CC list is determined by a CC indicated in the activation command, and the same set of TCI states is applied to all DL BWPs in the indicated CC. Only if a plurality of different values of CORESET pool indices (CORESETPoolIndex) in a CORESET information element (ControlResourceSet) are not provided for the UE, and at least one TCI code point mapped to two TCI states is not provided for the UE, one set of TCI state IDs can be activated for one set of CCs/DL BWPs.

For the PDCCH, the UE may be based on procedure B below.

### [Procedure B]

If up to two lists of cells for simultaneous TCI state activation by a simultaneous TCI update list (at least one of simultaneousTCI-UpdateList-r16 and simultaneousTCI-UpdateListSecond-r16) are provided for the UE by a simultaneous TCI cell list (simultaneousTCI-CellList), the UE applies, to CORESETs having index p in all configured DL BWPs of all configured cells in one list determined on the basis of a serving cell index provided by a MAC CE command, antenna port quasi co-location (QCL) provided by TCI states having the same activated TCI state ID value. Only if a plurality of different values of CORESET pool indices (CORESETPoolIndex) in a CORESET information element (ControlResourceSet) are not provided for the UE, and at least one TCI code point mapped to two TCI states is not provided for the UE, the simultaneous TCI cell list can be provided for the simultaneous TCI state activation.

For a semi-persistent (SP)/aperiodic (AP)-SRS, the UE may be based on procedure C below.

### [Procedure C]

When spatial relation information (spatialRelationInfo) for SP or AP-SRS resources configured by an SRS resource information element (higher layer parameter SRS-Resource) is activated/updated for one set of CCs/BWPs by a MAC CE, then an applicable CC list is indicated by a simultaneous spatial update list (higher layer parameter simultaneousSpatial-UpdateList-r16 or simultaneousSpatial-UpdateListSecond-r16), and in all BWPs in an indicated CC, the spatial relation information is applied to the SP or AP-SRS resources having the same SRS resource ID. Only if a plurality of different values of CORESET pool indices (CORESETPoolIndex) in a CORESET information element (ControlResourceSet) are not provided for the UE, and at least one TCI code point mapped to two TCI states is not provided for the UE, spatial relation information (spatialRelationInfo) for SP or AP-SRS resources configured by an SRS resource information element (higher layer parameter SRS-Resource) is activated/updated for one set of CCs/BWPs by a MAC CE.

The simultaneous TCI cell list (simultaneousTCI-CellList) and simultaneous TCI update list (at least one of simultaneousTCI-UpdateList1-r16 and simultaneousTCI-UpdateList2-r16) are lists of serving cells in which TCI relations can be simultaneously updated by using the MAC CE. simultaneousTCI-UpdateList1-r16 and simultaneousTCI-UpdateList2-r16 do not include the same serving cell.

The simultaneous spatial updated list (at least one of higher layer parameters simultaneousSpatial-UpdatedList1-r16 and simultaneousSpatial-UpdatedList2-r16) is a list of serving cells in which spatial relations can be simultaneously updated by using the MAC CE. simultaneousSpatial-UpdatedList1-r16 and simultaneousSpatial-UpdatedList2-r16 do not include the same serving cell.

Here, the simultaneous TCI update list and the simultaneous spatial updated list are configured by the RRC, the CORESET pool indices of the CORESET are configured by the RRC, and the TCI code point mapped to the TCI states is indicated by the MAC CE.

In the present disclosure, a CC list, a new CC list, a simultaneous TCI cell list, simultaneousTCI-CellList, a simultaneous TCI update list, simultaneousTCI-UpdateList1-r16, simultaneousTCI-UpdateList2-r16, a simultaneous spatial updated list, simultaneousSpatial-UpdatedList1-r16, and simultaneousSpatial-UpdatedList2-r16 may be interchangeably interpreted.

In the present disclosure, simultaneousTCI-UpdateList1, simultaneousTCI-UpdateList1-r16, and simultaneousTCI-UpdateList-r16 may be interchangeably interpreted. In the present disclosure, simultaneousTCI-UpdateList2, simultaneousTCI-UpdateList2-r16, and simultaneousTCI-UpdateListSecond-r16 may be interchangeably interpreted.

In the present disclosure, simultaneousSpatial-UpdatedList1, simultaneousSpatial-UpdatedList1-r16, and simultaneousSpatial-UpdateList-r16 may be interchangeably interpreted. In the present disclosure, simultaneousSpatial-UpdatedList2, simultaneousSpatial-UpdatedList2-r16, and simultaneousSpatial-UpdateListSecond-r16 may be interchangeably interpreted.

### (Unified/Common TCI Framework)

According to a unified TCI framework, UL and DL channels can be controlled by a common framework. Instead of defining a TCI state or a spatial relation for each channel in a manner similar to that of Rel. 15, the unified TCI framework may indicate a common beam (common TCI state) and apply the common beam to all UL and DL channels, or may apply a UL common beam to all UL channels and apply a DL common beam to all DL channels.

One common beam for both DL and UL or a DL common beam and a UL common beam (two common beams in total) are under study.

The UE may assume the same TCI state (joint TCI state, joint TCI pool, joint common TCI pool, joint TCI state set) for the UL and DL. The UE may assume different TCI states (separate TCI states, separate TCI pools, UL separate TCI pool and DL separate TCI pool, separate common TCI pools, UL common TCI pool and DL common TCI pool) for the respective UL and DL.

Default beams for the UL and DL may be unified by MAC CE-based beam management (MAC CE-level beam indication). The default beams may be unified with a default UL beam (spatial relation) by updating a default TCI state for the PDSCH.

A common beam/unified TCI state from the same TCI pool (joint common TCI pool, joint TCI pool, set) for both of the UL and DL may be indicated by DCI-based beam management (DCI-level beam indication). X (> 1) TCI states may be activated by the MAC CE. UL/DL DCI may select one TCI state from X active TCI states. The selected TCI state may be applied to channels/RSs for both of the UL and DL.

The TCI pool (set) may be a plurality of TCI states configured by an RRC parameter, or may be a plurality of TCI states (active TCI states, active TCI pools, sets) activated by the MAC CE, out of a plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) applied to a UL channel/RS and the number M (≥ 1) of TCI states (DL TCI states) applied to a DL channel/RS may be defined. At least one of N and M may be notified/configured/indicated for the UE via higher layer signaling/physical layer signaling.

In the present disclosure, description "N = M = X (X is an arbitrary integer)" may mean that X TCI states (joint TCI states) (corresponding to X TRPs) common to the UL and DL are notified/configured/indicated for the UE. Also, description "N = X (X is an arbitrary integer), M = Y (Y is an arbitrary integer, Y may be equal to X)" may mean that respective X UL TCI states (corresponding to X TRPs) and Y DL TCI states (corresponding to Y TRPs) (that is, separate TCI states) are notified/configured/indicated for the UE.

For example, description "N = M = 1" may mean that one TCI state common to the UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to the UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above-described examples, cases where values of N and M are 1 or 2 are described, but the values of N and M may be 3 or more, and N and M may be different from each other.

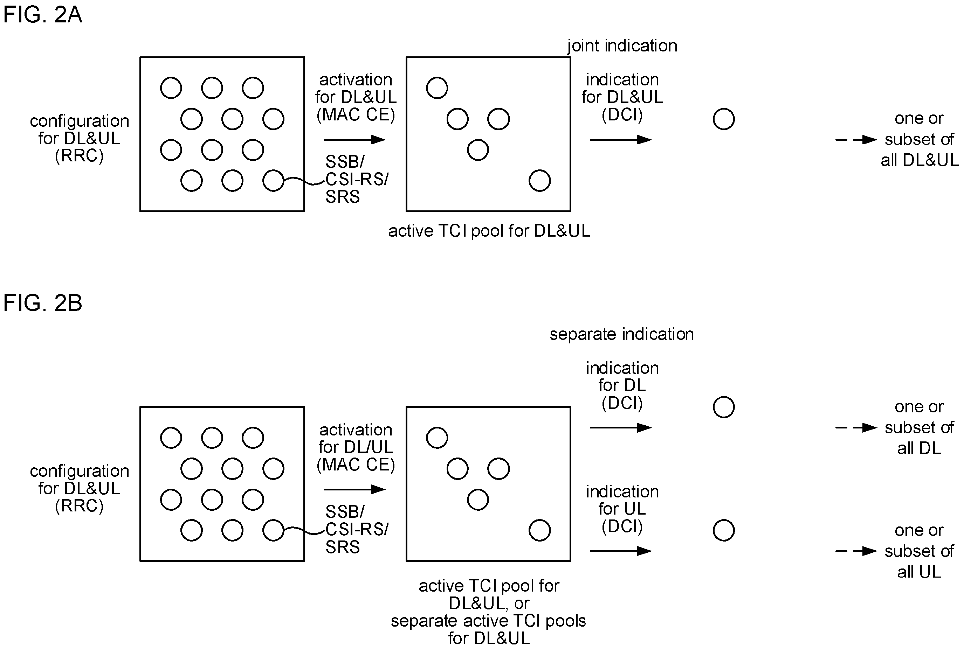

In an example of FIG. 2A, the RRC parameter (information element) configures a plurality of TCI states for both of the DL and UL. The MAC CE may activate a plurality of TCI states out of the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example of FIG. 2A, one dot may be one TCI state applied to both of the UL and DL, or may be two TCI states applied to the respective UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that in the present disclosure, a higher layer parameter (RRC parameter) to configure a plurality of TCI states may be referred to as configuration information to configure a plurality of TCI states, or may be simply referred to as "configuration information." In the present disclosure, a case that one of a plurality of TCI states is indicated by using DCI may be reception of indication information to indicate one of a plurality of TCI states included in the DCI, or may simply be reception of "indication information."

In an example of FIG. 2B, the RRC parameter configures a plurality of TCI states (joint common TCI pool) for both of the DL and UL. The MAC CE may activate a plurality of TCI states (active TCI pool) out of the plurality of configured TCI states. An (separate) active TCI pool for each of the UL and DL may be configured/activated.

DL DCI or new DCI format may select (indicate) one or more (for example, one) TCI states. The selected TCI states may be applied to one or more (or all) DL channels/RSs. The DL channels may be PDCCHs/PDSCHs/CSI-RSs. The UE may determine a TCI state for each DL channel/RS by using TCI state operation (TCI framework) in Rel. 16. UL DCI or new DCI format may select (indicate) one or more (for example, one) TCI states. The selected TCI states may be applied to one or more (or all) UL channels/RSs. The UL channels may be PUSCHs/SRSs/PUCCHs. Thus, different pieces of DCI may separately indicate the UL TCI and the DL DCI.

Existing DCI format 1_1/1_2 may be used for indication of the common TCI state.

A common TCI framework may have separate TCI states for the DL and UL.

In the present disclosure, a TCI state pool, a TCI state list, a unified TCI state pool, a joint TCI state pool, a separate TCI state pool, a separate DL/UL TCI state pool, a DL TCI state pool, a UL TCI state pool, a separate DL TCI state pool, and a separate UL TCI state pool may be interchangeably interpreted.

### (PL-RS/Transmission Power Control (TPC) Parameter)

For pathloss measurement in the unified TCI framework, a case that a pathloss reference signal (PL-RS) (configured for pathloss calculation) is included in a UL TCI state or a joint TCI state (if adaptable) or is associated with a UL TCI state or a joint TCI state (if adaptable) is under study.

For each of a PUSCH and a PUCCH, a case that a setting for P0/alpha/closed-loop index is associated with a UL TCI state or a joint TCI state (if adaptable) for each of BWPs is under study. In this case, a plurality of settings are configured. Each setting can be associated with at least one TCI state, and only one setting for the PUSCH and only one setting for the PUCCH can be associated with a given TCI state at once.

For the unified TCI framework, a case that a setting for a UL power control (PC) parameter (P0/alpha/closed-loop index) except the PL-RS for an SRS is associated with a UL TCI state or a joint TCI state (if adaptable) is under study.

That is, for the unified TCI framework, a case that a TPC parameter (P0/alpha/closed-loop index) except the PL-RS is associated with a UL TCI state or a joint TCI state (if adaptable) for a PUCCH/PUSCH/SRS and a case that settings for P0/alpha/closed-loop index are separately configured for the PUCCH/PUSCH/SRS are under study.

In the present disclosure, the TPC parameter and a UL PC parameter may be interchangeably interpreted. In the present disclosure, the TPC parameter except the PL-RS and P0/alpha/closed-loop index may be interchangeably interpreted.

### (Unified TCI Framework in Carrier Aggregation (CA))

For Rel-17 (or later versions) NR, introduction of a unified TCI state framework in CA is under study. It is expected that the common TCI state indicated for the UE is common among CCs (cells) (QCL type D among at least CCs). This is due to a case that simultaneous reception of different DL channels/RSs of QCL type D and simultaneous transmission of different UL channels/RSs with spatial relations are not supported by existing specifications (Rel. 15/16) except in a case of transmission/reception using multiple TRPs or the like.

For the unified TCI framework, update/activation of a common TCI state ID performed in order to provide common QCL information/common UL transmission spatial filter across a set of a plurality of configured CCs is under study.

As a TCI state pool for the CA, option 1 and option 2 below are under study.

### [Option 1]

A single TCI state pool configured by RRC may be shared (configured) with a set of a plurality of configured CCs (cells)/BWPs. For example, a cell group TCI state may be defined, or a TCI state pool for PDSCHs in reference cells may be reused. A CC (cell) ID for a QCL type A RS may be absent in a TCI state, and the CC (cell) ID for the QCL type A RS may be determined in accordance with a target CC (cell) with the TCI state.

In option 1, a common TCI state pool is configured for each plurality of CCs/BWPs, and thus when one common TCI state is indicated by using a MAC CE/DCI, the indicated common TCI state may be applied to all CCs/BWPs (all CCs/BWPs included in a pre-configured CC/BWP list).

### [Option 2]

A TCI state pool may be configured by the RRC for each individual CC.

In option 2, when an applied CC/BWP list for simultaneous beam update is pre-configured by using RRC, and beam update is performed by using a MAC CE/DCI in any one of CCs/BWPs included in the CC/BWP list, in a manner similar to that of Rel. 16, the update may be applied to all CCs/BWPs.

In option 1, a common TCI state pool is configured (shared) by the RRC for the plurality of CCs, a TCI state in the common TCI state pool is indicated by the common TCI state ID, and one RS determined on the basis of the TCI state is used for indicating QCL type D across the set of the plurality of configured CCs/ (constraint 1).

In option 2, an individual common TCI state pool is configured by the RRC for each CC, a TCI state in the common state pool is indicated by the common TCI state ID, and one RS determined on the basis of the TCI state is used for indicating QCL type D across the set of the plurality of configured CCs/ (constraint 2).

### (Transmission Power Control)

### <PUSCH Transmission Power Control>

In NR, transmission power for a PUSCH is controlled on the basis of a TPC command (also referred to as a value, an increasing/decreasing value, a correction value, or the like) indicated by a value of a field (also referred to as a TPC command field or the like) in DCI.

For example, when a UE transmits the PUSCH on active UL BWP b for carrier f in serving cell c by using a parameter set having index j (open-loop parameter set) and index 1 of a power control adjustment state (PUSCH power control adjustment state), transmission power for the PUSCH (P*_{PUSCH,b,f,c}* (i,j,q*_{d}*,l)) [dBm] in PUSCH transmission occasion (also referred to as a transmission period or the like) i may be based on at least one of P*_{CMAX,f,c}* (i), *P_{O_PUSCH},_{b,f,c}* (j), M*^{PUSCH}_{RB,b,f,c}* (i), α*_{b,f,c}* (j), PL*_{b,f,c}* (q*_{d}*), Δ*_{TF,b,f,c}* (i), and fb,f,c (i,l).

The power control adjustment state may be referred to as a value based on a TPC command with power control adjustment state index 1, a cumulative sum value of a TPC command, or a closed-loop value. 1 may be referred to as a closed-loop index.

PUSCH transmission occasion i is a period in which the PUSCH is transmitted, and may be constituted by, for example, one or more symbols, one or more slots, or the like.

P*_{CMAX,f,c}* (i) is, for example, transmission power (also referred to as maximum transmission power, UE maximum output power, or the like) of a user terminal configured for carrier f in serving cell c in transmission occasion i.

P*_{O_PUSCH,b,f,c}* (j) is, for example, a parameter related to target received power configured for active UL BWP b for carrier f in serving cell c in transmission occasion i (also referred to as, for example, a parameter related to transmission power offset, transmission power offset P0, a target received power parameter, or the like) . P*_{O_UE_PUSCH,b,f,c}* (j) may be the sum of *P_{O_NOMINAL_PUSCH,f,c}* (j) and *P_{O_UE_PUSCH,b,f,c}* (j).

M*^{PUSCH}_{RB,b,f,c}* (i) is, for example, the number of resource blocks (bandwidths) allocated to the PUSCH for transmission occasion i in active UL BWP b for carrier f in serving cell c and with subcarrier spacing µ. α*_{b,f,c}* (j) is a value provided by a higher layer parameter (also referred to as, for example, msg3-Alpha, p0-PUSCH-Alpha, a fractional factor, or the like).

PL*_{b,f,c}* (q*_{d}*) is, for example, a pathloss (pathloss estimation [dB], pathloss compensation) calculated in the user terminal by using index q*_{d}* of a reference signal (RS, pathloss reference RS, pathloss (PL)-RS, RS for pathloss reference, DL-RS for pathloss measurement, PUSCH-PathlossReferenceRS) for a downlink BWP associated with active UL BWP b for carrier f in serving cell c.

When the pathloss reference RS (for example, PUSCH-PathlossReferenceRS) is not provided for the UE or when a dedicated higher layer parameter is not provided for the UE, the UE may calculate PL*_{b,f,c}* (q*_{d}*) by using an RS resource from a synchronization signal (SS)/physical broadcast channel (PBCH) block (SS block (SSB)) used for obtaining a Master Information Block (MIB).

When a number of RS resource indexes being up to a value of a maximum number of pathloss reference RSs (for example, maxNrofPUSCH-PathlossReferenceRSs) is configured for the UE, and a set of respective RS configurations for the RS resource indexes is configured for the UE by the pathloss reference RS, the set for the RS resource indexes may include one or both of a set of SS/PBCH block indexes and a set of channel state information (CSI)-reference signal (RS) resource indexes. The UE may identify RS resource index q*_{d}* in the set for the RS resource indexes.

When PUSCH transmission has been scheduled by a Random Access Response (RAR) UL grant, the UE may use same RS resource index q*_{d}* as that for corresponding PRACH transmission.

When a configuration of PUSCH power control using a sounding reference signal (SRS) resource indicator (SRI) (for example, SRI-PUSCH-PowerControl) is provided for the UE, and one or more values of IDs for the pathloss reference RS are provided for the UE, mapping between a set of values for an SRI field in DCI format 0_1 and a set of ID values for the pathloss reference RS may be obtained from higher layer signaling (for example, sri-PUSCH-PowerControl-Id in SRI-PUSCH-PowerControl). The UE may determine RS resource index q*_{d}* on the basis of an ID of the pathloss reference RS mapped to an SRI field value in DCI format 0_1 to schedule the PUSCH.

When PUSCH transmission is scheduled by DCI format 0_0, and PUCCH spatial relation information for a PUCCH resource having the lowest index for active UL BWP b for each carrier f and serving cell c is not provided for the UE, the UE may use same RS resource index q*_{d}* as that for PUCCH transmission in the PUCCH resource.

When PUSCH transmission is scheduled by DCI format 0_0, and a spatial setting for PUCCH transmission is not provided for the UE, when PUSCH transmission is scheduled by DCI format 0_1 not including the SRI field, or when the configuration of the PUSCH power control using the SRI is not provided for the UE, the UE may use RS resource index q*_{d}* having a pathloss reference RS ID with zero.

When a configured grant configuration includes a specific parameter (for example, rrc-ConfiguredUplinkGrant) for PUSCH transmission configured by the configured grant configuration (for example, ConfiguredGrantConfig), RS resource index q*_{d}* may be provided for the UE by a pathloss reference index (for example, pathlossReferenceIndex) in the specific parameter.

When the configured grant configuration does not include the specific parameter for the PUSCH transmission configured by the configured grant configuration, the UE may determine RS resource index q*_{d}* on the basis of a pathloss reference RS ID value mapped to an SRI field in a DCI format to activate the PUSCH transmission. When the DCI format does not include the SRI field, the UE may determine RS resource index q*_{d}* having the pathloss reference RS ID with zero.

Δ*_{TF,b,f,c}* (i) is a transmission power adjustment component (offset, transmission format compensation) for UL BWP b for carrier f in serving cell c.

f*_{b,f,c}* (i,l) is a PUSCH power control adjustment state for active UL BWP b for carrier f in serving cell c in transmission occasion i. For example, f_{*b,f,*c} (i,l) may be based on δ*_{PUSCH,b,f,c}* (i,l).

When TPC accumulation is enabled, f*_{b,f,c}* (i,l) may be based on a cumulative sum value of δ*_{PUSCH,b,f,c}* (m,l).

When the TPC accumulation is disabled, f*_{b,f,c}* (i,l) may be δ*_{PUSCH,b,f,c}* (i,l) (absolute value).

When information indicating the disabled TPC accumulation (TPC-Accumulation) is not configured (when information indicating the disabled TPC accumulation is not provided, when the TPC accumulation has been configured as enabled), the UE accumulates a TPC command value, and determines transmission power on the basis of a result of the accumulation (power control state) (applies the TPC command value via the accumulation).

When the information indicating the disabled TPC accumulation (TPC-Accumulation) has been configured (when information indicating the disabled TPC accumulation has been provided, when the TPC accumulation has been configured as disabled), the UE the UE does not accumulate the TPC command value, and determines transmission power on the basis of a TPC command value (power control state) (applies the TPC command value without using the accumulation).

δ*_{PUSCH,b,f,c}* (i,l) may be a TPC command value included in DCI format 0_0 or DCI format 0_1 to schedule PUSCH transmission occasion i on active UL BWP b for carrier f in serving cell c, or may be a TPC command value coded by being combined with another TPC command in DCI format 2_2 having a CRC scrambled by a specific RNTI (Radio Network Temporary Identifier) (for example, TPC-PUSCH-RNTI).

∑ₘ₌₀^{C(Di)-1}δ*_{PUCCH,b,f,c}* (m,l)may be the sum of TPC command values in set D*ᵢ* of TPC command values having cardinality C (D*ᵢ*). D*ᵢ* may be a set of TPC command values received by the UE for PUSCH power control adjustment state 1 between K*_{PUSCH}* (i-i₀)-1 symbols before PUSCH transmission occasion i-i₀ and K*_{PUSCH}* (i) symbols before PUSCH transmission occasion i on active UL BWP b for carrier f in serving cell c. io may be the lowest positive integer that causes K*_{PUSCH}* (i-i₀) symbols before PUSCH transmission occasion i-i₀ to be earlier than K*_{PUSCH}* (i) symbols before PUSCH transmission occasion i.

If PUSCH transmission is scheduled by DCI format 0_0 or DCI format 0_1, K*_{PUSCH}* (i) may be the number of symbols in active UL BWP b for carrier f in serving cell c after the last symbol for corresponding PDCCH reception and before the first symbol for the PUSCH transmission. If PUSCH transmission is configured by configured grant configuration information (ConfiguredGrantConfig), K*_{PUSCH}* (i) may be the number of K*_{PUSCH,min}* symbols equal to the product of the number N*_{symb}^{slot}* of symbols per slot in active UL BWP b for carrier f in serving cell c and a minimum value of a value provided by k2 in PUSCH-common configuration information (PUSCH-ConfigCommon).

Whether to have a plurality of states (for example, two states) or a single state may be configured for the power control adjustment state by a higher layer parameter. When a plurality of power control adjustment states are configured, one of the plurality of power control adjustment states may be identified by index 1 (for example, 1 ∈ {0, 1}) .

### <PUCCH Transmission Power Control>

In NR, transmission power for a PUCCH is controlled on the basis of a TPC command (also referred to as a value, an increasing/decreasing value, a correction value, an indicated value, or the like) indicated by a value of a field (also referred to as a TPC command field, a first field, or the like) in DCI.

For example, by using index 1 of a power control adjustment state (PUCCH power control adjustment state), transmission power for the PUCCH (P*_{PUCCH,b,f,c}* (i,q*ᵤ*,q*_{d}*,l)) [dBm] in PUCCH transmission occasion (also referred to as a transmission period or the like) i regarding active UL BWP b for carrier f in serving cell c may be based on at least one of P*_{CMAX,f,c}* (i), *P_{O_PUCCH,b,f,c} (qu),* M*^{PUCCH}_{RB,b,f,c}* (i), PL*_{b,f,c}* (q*_{d}*), Δ*_{F_PUCCH}* (*F*), Δ*_{TF,b,f,c}* (i), and g*_{b,f,c}* (i,l).

The power control adjustment state may be referred to as a value based on a TPC command with power control adjustment state index 1, a cumulative sum value of a TPC command, or a closed-loop value. 1 may be referred to as a closed-loop index.

PUCCH transmission occasion i is a period in which the PUCCH is transmitted, and may be constituted by, for example, one or more symbols, one or more slots, or the like.

P*_{CMAX,f,c}* (i) is, for example, transmission power (also referred to as maximum transmission power, UE maximum output power, or the like) of a user terminal configured for carrier f in serving cell c in transmission occasion i. P*_{O_PUCCH,b,f,c}* (q*ᵤ*) is, for example, a parameter related to target received power configured for active UL BWP b for carrier f in serving cell c in transmission occasion i (also referred to as, for example, a parameter related to transmission power offset, transmission power offset P0, a target received power parameter, or the like).

M*^{PUCCH}_{RB,b,f,c}* (i) is, for example, the number of resource blocks (bandwidths) allocated to the PUCCH for transmission occasion i in active UL BWP b for carrier f in serving cell c and with subcarrier spacing µ. PL*_{b,f,c}* (q*_{d}*) is, for example, a pathloss (pathloss estimation [dB], pathloss compensation) calculated in the user terminal by using index q*_{d}* of a reference signal (pathloss reference RS, pathloss (PL)-RS, RS for pathloss reference, DL-RS for pathloss measurement, PUCCH-PathlossReferenceRS) for a downlink BWP associated with active UL BWP b for carrier f in serving cell c.

If pathloss reference RSs (pathlossReferenceRSs) are not given to the UE or before a dedicated higher layer parameter is given to the UE, the UE calculates pathloss PL*_{b,f,c}* (q*_{d}*) by using an RS resource obtained from an SS/PBCH block used by the UE for obtaining an MIB.

If pathloss reference RS information (pathlossReferenceRSs in PUCCH power control information (PUCCH-PowerControl)) is given to the UE, and PUCCH spatial relation information (PUCCH-SpatialRelationInfo) is not given to the UE, the UE obtains a value of a reference signal (referencesignal) in PUCCH pathloss reference RSs from a PUCCH pathloss reference RS-ID (PUCCH-PathlossReferenceRS-Id) having index 0 in PUCCH pathloss reference RS information (PUCCH-PathlossReferenceRS). This reference signal resource is present on any one of the same serving cell or a serving cell indicated by a value of pathloss reference linking information (pathlossReferenceLinking), if given. The pathloss reference linking information indicates which of DL in a special cell (SpCell) or DL in a secondary cell (SCell) corresponding to this UL is applied by the UE as pathloss reference. The SpCell may be a primary cell (PCell) in a master cell group (MCG), or may be a primary secondary cell (PSCell) in a secondary cell group (SCG). The pathloss reference RS information indicates a set of reference signals (for example, CSI-RS configurations or SS/PBCH blocks) used for PUCCH pathloss estimation.

Δ*_{F_PUCCH}* (F) is a higher layer parameter given for each of PUCCH formats. Δ*_{TF,b,f,c}* (i) is a transmission power adjustment component (offset) for UL BWP b for carrier f in serving cell c.

g*_{b,f,c}* (i,l) is a value based on a TPC command for the above-described power control adjustment state index 1 for the active UL BWP for carrier f in serving cell c and transmission occasion i (for example, a power control adjustment state, a cumulative sum value of the TPC command, a closed-loop value, or a PUCCH power adjustment state). For example, g*_{b,f,c}* (i,l) may be based on δ*_{PUCCH,b,f,c}* (i,l).

When TPC accumulation is enabled, g*_{b,f,c}* (i,l) may be based on a cumulative sum value of δ*_{PUCCH,b,f,c}* (i,l).

When the TPC accumulation is disabled, g*_{b,f,c}* (i,l) may be δ*_{PUCCH,b,f,c}* (i,l) (absolute value).

Here, δ*_{PUCCH,b,f,c}* (i,l) is a TPC command value, and may be included in DCI format 1_0 or DCI format 1_1 detected by the UE in PUCCH transmission occasion i on active UL BWP b for carrier f in serving cell c, or may be coded by being combined with another TPC command in DCI format 2_2 having a CRC scrambled by a specific RNTI (Radio Network Temporary Identifier) (for example, TPC-PUSCH-RNTI).

∑ₘ₌₀^{C(Ci)*-*1}δ*_{PUCCH,b,f,c}* (m,l)may be the sum of TPC command values in set C*ᵢ* of TPC command values having cardinality C (C*ᵢ*). C*ᵢ* may be a set of TPC command values received by the UE for PUCCH power control adjustment state 1 between K*_{PUCCH}* (i-i₀)-1 symbols before PUCCH transmission occasion i-i₀ and K*_{PUCCH}* (i) symbols before PUSCH transmission occasion i on active UL BWP b for carrier f in serving cell c. io may be the lowest positive integer that causes K*_{PUCCH}* (i-i₀) symbols before PUSCH transmission occasion i-i₀ to be earlier than K*_{PUCCH}* (i) symbols before PUSCH transmission occasion i.

If PUCCH transmission responds to detection of DCI format 1_0 or DCI format 1_1 by the UE, K*_{PUCCH}* (i) may be the number of symbols in active UL BWP b for carrier f in serving cell c after the last symbol for corresponding PDCCH reception and before the first symbol for the PUCCH transmission. If PUCCH transmission is configured by configured grant configuration information (ConfiguredGrantConfig), K*_{PUSCH}* (i) may be the number of K*_{PUCCH,min}* symbols equal to the product of the number N*_{symb}^{slot}* of symbols per slot in active UL BWP b for carrier f in serving cell c and a minimum value of a value provided by k2 in PUSCH-common configuration information (PUSCH-ConfigCommon).

If information (twoPUCCH-PC-AdjustmentStates) indicating use of two PUCCH power control adjustment states and PUCCH spatial relation information (PUCCH-SpatialRelationInfo) are provided for the UE, 1 may be equal to {0, 1}, and when the information indicating use of the two PUCCH power control adjustment states or the PUCCH spatial relation information is not provided for the UE, 1 may be equal to 0.

If the UE obtains a TPC command value from DCI format 1_0 or DCI format 1_1, and the PUCCH spatial relation information is provided for the UE, the UE may obtain mapping between a PUCCH spatial relation information ID (pucch-SpatialRelationInfoId) value and a closed-loop index (closedLoopIndex, power adjustment state index 1) by using an index provided by a PUCCH P0 ID (p0-PUCCH-Id in p0-Set in PUCCH-PowerControl in PUCCH-Config). When the UE has received an activation command including a value of the PUCCH spatial relation information ID, the UE may determine a value of the closed-loop index to provide an 1 value through linking to a corresponding PUCCH P0 ID.

If a configuration of a P*_{O_PUCCH,b,f,c}* (q*ᵤ*) value for corresponding PUCCH power adjustment state 1 is provided for the UE by a higher layer in relation to active UL BWP b for carrier f in serving cell c, g*_{b,f,c}* (i,l) = 0, and k = 0, 1, ..., i. If the PUCCH spatial relation information is provided for the UE, the UE may determine, on the basis of the PUCCH spatial relation information associated with a PUCCH P0 ID corresponding to q*ᵤ* and a closed-loop index value corresponding to 1, an 1 value based on a q*ᵤ* value.

q*ᵤ* may be a PUCCH P0 ID (p0-PUCCH-Id) indicating PUCCH P0 (P0-PUCCH) in a PUCCH P0 set (p0-Set).

If PUCCH spatial relation information (PUCCH-SpatialRelationInfo) is not provided for the UE, the UE obtains a PUCCH P0 value (p0-PUCCH-Value) from a PUCCH P0-ID value equal to a minimum value of the PUCCH P0-ID (p0-PUCCH-Id) in the P0 set (p0-set).

If pathloss reference RSs (pathlossReferenceRSs) are provided for the UE, and PUCCH spatial relation information (PUCCH-SpatialRelationInfo) is not provided for the UE, the UE obtains a value of a reference signal (referencesignal) in PUCCH pathloss reference RSs from a PUCCH pathloss reference RS-ID (pucch-PathlossReferenceRS-Id) having index 0 in a PUCCH pathloss reference RS (PUCCH-PathlossReferenceRS). That obtained RS resource is present on a primary cell, or is, if pathloss reference linking (pathlossReferenceLinking) is provided, present on a serving cell indicated by a value of the pathloss reference linking.

If the number of PUCCH power control adjustment states maintained by the UE being two (twoPUCCH-PC-AdjustmentStates) and the PUCCH spatial relation information are provided for the UE, PUCCH power control adjustment state (closed-loop) index 1 ∈ {0, 1}. If the number of PUCCH power control adjustment states maintained by the UE being two or the PUCCH spatial relation information is not provided for the UE, PUCCH power control adjustment state (closed-loop) index l = 0.

That is, if the PUCCH spatial relation information is not provided for the UE, P0, PL-RS, and closed-loop index are determined in accordance with a rule. In this case, the lowest PUCCH P0-ID is applied, PUCCH pathloss reference RS-ID = 0 is applied, and 1 = 0 is applied.

In an RRC information element (IE), a PUCCH power control information element (PUCCH-PowerControl) includes a P0 set (p0-Set) being a set of PUCCH P0 (P0-PUCCH) and pathloss reference RSs (pathlossReferenceRSs) being a set of PUCCH pathloss reference RSs (PUCCH-PathlossReferenceRS). PUCCH P0 includes a PUCCH P0-ID (P0-PUCCH-Id) and a PUCCH P0 value (p0-PUCCH-Value). The PUCCH pathloss reference RS includes a PUCCH pathloss reference RS-ID (PUCCH-PathlossReferenceRS-Id) and a reference signal (referenceSignal, SSB index or NZP-CSI-RS resource ID).

### <SRS Transmission Power Control>

For example, by using index 1 of a power control adjustment state, transmission power for the SRS (P*_{SRS,b,f,c}* (i,q*ₛ*,l)) in SRS transmission occasion (also referred to as a transmission period or the like) i regarding active UL BWP b for carrier f in serving cell c may be based on at least one of P*_{CMAX,f,c}* (i), *P_{O_SRS,b,f,c}* (q*ₛ*), M*_{SRS,b,f,c}* (i), α*_{SRS,b,f,c}* (q*ₛ*), PL_{*b*,*f*,*c*} (q*_{d}*), and h*_{b,f,c}* (i,l).

The power control adjustment state may be referred to as a value based on a TPC command with power control adjustment state index 1, a cumulative sum value of a TPC command, or a closed-loop value. 1 may be referred to as a closed-loop index.

SRS transmission occasion i is a period in which the SRS is transmitted, and may be constituted by, for example, one or more symbols, one or more slots, or the like.

Here, P*_{CMAX,f,c}* (i) is, for example, UE maximum output power for carrier f in serving cell c in SRS transmission occasion i. P*_{O_SRS,b,f,c}* (q*ₛ*) is a parameter related to target received power provided by p0 for active UL BWP b for carrier f in serving cell c and for SRS resource set q*ₛ* (provided by SRS-ResourceSet and SRS-ResourceSetId) (also referred to as, for example, a parameter related to transmission power offset, transmission power offset P0, a target received power parameter, or the like).

M*_{SRS,b,f,c}* (i) is an SRS bandwidth expressed by the number of resource blocks for SRS transmission occasion i on active UL BWP b for carrier f in serving cell c and with subcarrier spacing µ.

α*_{SRS,b,f,c}* (q*ₛ*) is provided by α (for example, alpha) for active UL BWP b for carrier f in serving cell c and with subcarrier spacing µ, and for SRS resource set q*ₛ*.

PL*_{b,f,c}* (q*_{d}*) is a DL pathloss estimation value [dB] (pathloss estimation [dB], pathloss compensation) calculated by the UE with RS resource index q*_{d}* for an active DL BWP in serving cell c and for SRS resource set q*ₛ*. RS resource index q*_{d}* is a pathloss reference RS (RS for pathloss reference, pathloss (PL)-RS, or DL-RS for pathloss measurement, which is provided by, for example, pathlossReferenceRS) associated with SRS resource set q*ₛ*, and is an SS/PBCH block index (for example, ssb-Index) or a CSI-RS resource index (for example, csi-RS-Index).

If pathloss reference RSs (pathlossReferenceRSs) are not given to the UE or before a dedicated higher layer parameter is given to the UE, the UE calculates PL*_{b,f,c}* (q*_{d}*) by using an RS resource obtained from an SS/PBCH block used by the UE for obtaining an MIB.

h*_{b,f,c}* (i,l) is an SRS power control adjustment state for the active UL BWP for carrier f in serving cell c in SRS transmission occasion i. When a configuration of the SRS power control adjustment state (for example, srs-PowerControlAdjustmentStates) indicates the same power control adjustment state for SRS transmission and PUSCH transmission, h*_{b,f,c}* (i,l) is a present PUSCH power control adjustment state f*_{b,f,c}* (i,l) . On the other hand, when the configuration of the SRS power control adjustment state indicates independent power control adjustment states for SRS transmission and PUSCH transmission, SRS power control adjustment state h*_{b,f,c}* (i,l) may be based on δ*_{SRS,b,f,c}* (m) .

When TPC accumulation is enabled, h*_{b,f,c}* (i) may be based on a cumulative sum value of δ*_{SRS,b,f,c}* (m) .

When the TPC accumulation is disabled, h*_{b,f,c}* (i) may be δ*_{SRS,b,f,c}* (i) (absolute value).

Here, δ*_{SRS,b,f,c}* (m) may be a TPC command value coded by being combined with another TPC command in a PDCCH having DCI (for example, DCI format 2_3). ∑ₘ₌₀^{C(Si)-1}δ*_{SRS,b,f,c}* (m) may be the sum of TPC commands in set S*ᵢ* of TPC command values having cardinality C (S*ᵢ*) received by the UE between K*_{SRS}* (i-i₀)-1 symbols before SRS transmission occasion i-i₀ and K*_{SRS}* (i) symbols before SRS transmission occasion i on active UL BWP b for carrier f in serving cell c and with subcarrier spacing µ. Here, io may be the lowest positive integer that causes K*_{SRS}* (i-i₀)-1 symbols before SRS transmission occasion i-io to be earlier than K*_{SRS}* (i) symbols before SRS transmission occasion i.

If SRS transmission is aperiodic, K*_{SRS}* (i) may be the number of symbols in active UL BWP b for carrier f in serving cell c after the last symbol for a corresponding PDCCH to trigger the SRS transmission and before the first symbol for the SRS transmission. If SRS transmission is semi-persistent or periodic, K*_{SRS}* (i) may be the number of K*_{SRS,min}* symbols equal to the product of the number N*_{symb}^{slot}* of symbols per slot in active UL BWP b for carrier f in serving cell c and a minimum value of a value provided by k2 in PUSCH-common configuration information (PUSCH-ConfigCommon).

### (Analysis)

For a unified TCI framework in Rel. 17, assumption 1-1 to assumption 1-4 below for update and activation of a common TCI state ID for providing at least one of common QCL information for a UE-dedicated PDCCH/PDSCH and a common UL TX spatial filter for a UE-dedicated PUSCH/PUCCH across a set of a plurality of CCs/a plurality of BWPs are under study.

### [Assumption 1-1]

A TCI state pool to be RRC configured may be configured in a PDSCH configuration (PDSCH-Config) for each BWP/CC in a manner similar to that of Rel. 15/16. Such configuration of the TCI state pool to be RRC configured does not imply that a separate DL/UL TCI state pool is excluded or supported.

### [Assumption 1-2]

A TCI state pool to be RRC configured may not be present in a PDSCH configuration (PDSCH-Config) for each BWP/CC, and may be replaced with reference to a TCI state pool to be RRC configured in a reference BWP/CC. In a PDSCH configuration (PDSCH-Config) for the reference BWP/CC, the TCI state pool to be RRC configured is configured. The UE applies, to a BWP/CC in which the PDSCH configuration includes reference to a TCI state pool to be RRC configured in a reference BWP/CC, the TCI state pool to be RRC configured in the reference BWP/CC.

### [Assumption 1-3]

When a BWP/CC ID (bwp-Id/cell) for a QCL type A/D source RS in QCL information (QCL-Info) for a TCI state is absent, the UE assumes that the QCL type A/D source 1-RS is present in a BWP/CC to which the TCI state is applied.

### [Assumption 1-4]

A UE capability for reporting a maximum number of TCI state pools supported across a plurality of BWPs and a plurality of CCs in a band is introduced, and its candidate value includes at least 1.

For the unified TCI framework in Rel. 17, assumption 2-1 to assumption 2-3 below for update and activation of a common TCI state ID for providing at least one of common QCL information for a UE-dedicated PDCCH/PDSCH and a common UL TX spatial filter for a UE-dedicated PUSCH/PUCCH across a set of a plurality of CCs/a plurality of BWPs are under study.

### [Assumption 2-1]

A source RS determined on the basis of a common TCI state ID indicated for providing a QCL type D indication and determining a UL TX spatial filter for a target CC may be configured in the target CC or another CC.

### [Assumption 2-2]

For intra-band CA, configuration 1 to configuration 2 below may be supported without an additional QCL rule.
[[Configuration 1]] One source RS across a plurality of CCs may be determined on the basis of a common TCI state ID indicated for providing a QCL type D indication and determining a UL TX spatial filter for a configured set of CCs.
[[Configuration 2]] One source RS for each CC may be determined on the basis of the common TCI state ID indicated for providing the QCL type D indication and determining the UL TX spatial filter for the configured set of CCs. A plurality of CC-specific source RSs may be associated with the same QCL type D RS.

### [Assumption 2-3]

A configured set of CCs/BWPs includes all BWPs in configured CCs.

In CA, a CC-specific TCI state pool/configuration (case 1) and a CC-common TCI state pool/configuration (case 2) may be supported.

### [Case 1]

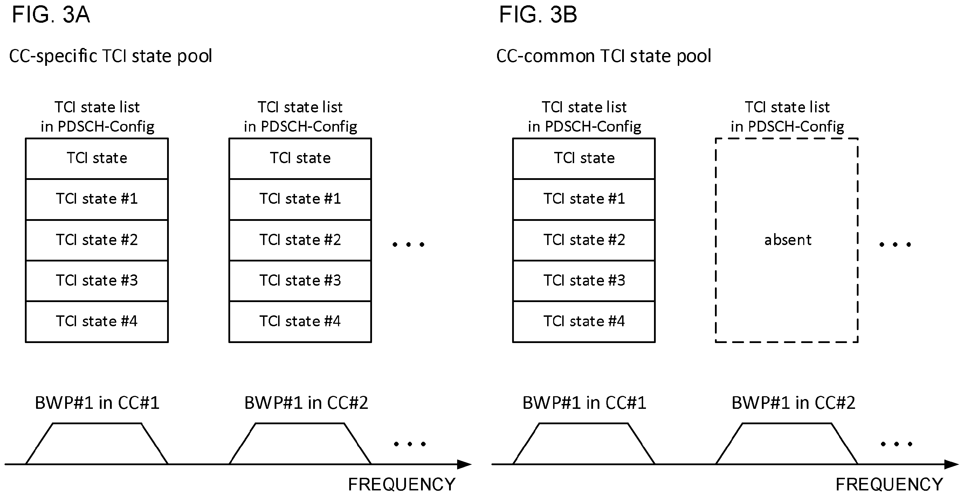

FIG. 3A shows an example of the CC-specific TCI state pool. In this example, a TCI state list in a PDSCH configuration is configured for BWP 1 in CC 1, and a TCI state list in a PDSCH configuration is configured for BWP 1 in CC 2. One MAC CE/DCI indicates a TCI state ID.

### [Case 2]

FIG. 3B shows an example of the CC-common TCI state pool. In this example, the TCI state list in the PDSCH configuration is configured for BWP 1 in CC 1, and the TCI state list in the PDSCH configuration is not configured (absent) for BWP 1 in CC 2. One MAC CE/DCI indicates a TCI state ID (for example, TCI state #2).

One TCI state information element (TCI-State) in the TCI state pool may include a TCI state ID, QCL type 1 (QCL information, QCL-Info), and QCL type 2 (QCL information, QCL-Info).

### [Case 1]

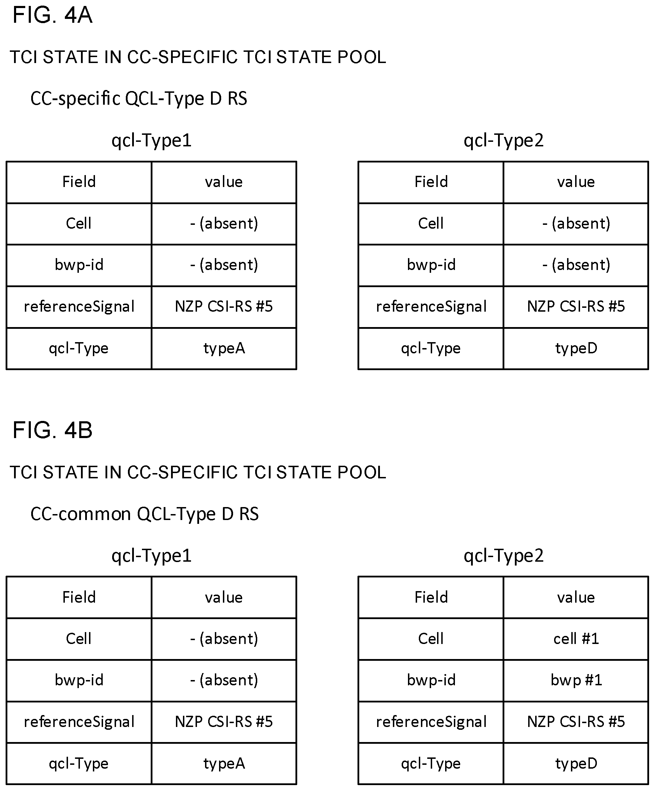

FIG. 4A shows an example in which a TCI state in the CC-specific TCI state pool indicates a CC-specific QCL type D RS. QCL type 1 does not include a cell ID and a BWP ID, and includes a reference signal (referenceSignal = NZP-CSI-RS #5) and a QCL type (qcl-Type = typeA). QCL type 2 does not include a cell ID and a BWP ID, and includes a reference signal (referenceSignal = NZP-CSI-RS #5) and a QCL type (qcl-Type = typeD).

FIG. 4B shows an example in which the TCI state in the CC-specific TCI state pool indicates a CC-common QCL type D RS. QCL type 1 does not include a cell ID and a BWP ID, and includes a reference signal (referenceSignal = NZP-CSI-RS #5) and a QCL type (qcl-Type = typeA). QCL type 2 includes a cell ID (cell = #1), a BWP ID (bwp-Id = #1), a reference signal (referenceSignal = NZP-CSI-RS #5), and a QCL type (qcl-Type = typeD).

### [Case 2]

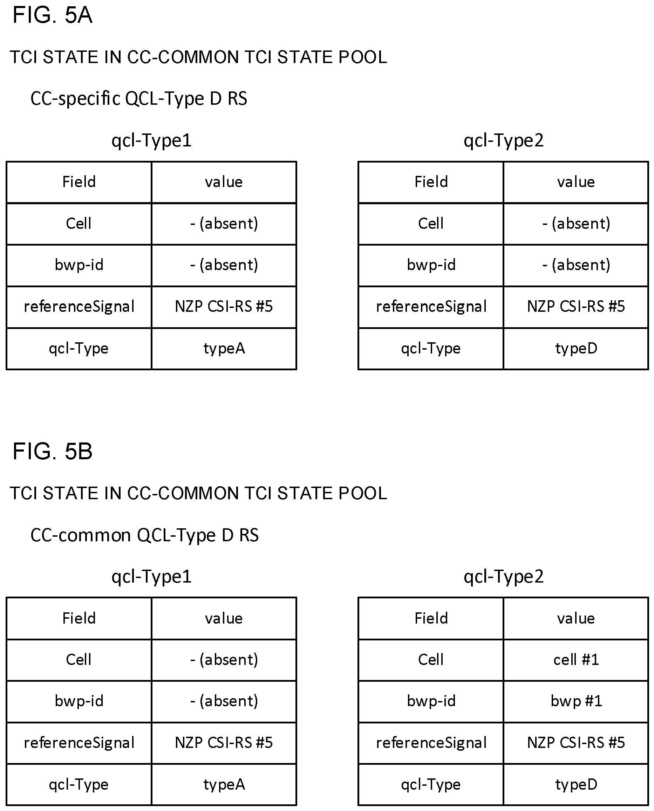

FIG. 5A shows an example in which a TCI state in the CC-common TCI state pool indicates a CC-specific QCL type D RS. QCL type 1 does not include a cell ID and a BWP ID, and includes a reference signal (referenceSignal = NZP-CSI-RS #5) and a QCL type (qcl-Type = typeA). QCL type 2 does not include a cell ID and a BWP ID, and includes a reference signal (referenceSignal = NZP-CSI-RS #5) and a QCL type (qcl-Type = typeD).

FIG. 5B shows an example in which the TCI state in the CC-common TCI state pool indicates a CC-common QCL type D RS. QCL type 1 does not include a cell ID and a BWP ID, and includes a reference signal (referenceSignal = NZP-CSI-RS #5) and a QCL type (qcl-Type = typeA). QCL type 2 includes a cell ID (cell = #1), a BWP ID (bwp-Id = #1), a reference signal (referenceSignal = NZP-CSI-RS #5), and a QCL type (qcl-Type = typeD).

In both of case 1 and case 2, the TCI state may indicate a CC-specific (BWP/CC-specific) RS (for example, a QCL type A RS) on each BWP/CC.

### [Case 1]

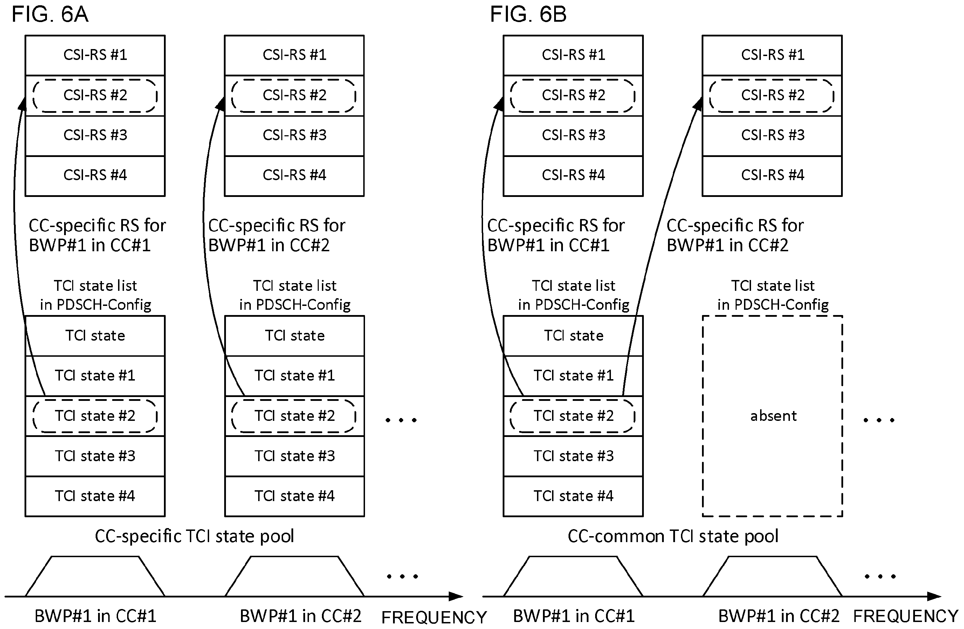

FIG. 6A shows an example in which a TCI state in the CC-specific TCI state pool indicates the CC-specific RS. A TCI state configured for BWP 1 in CC 1 indicates a CC-specific RS for BWP 1 in CC 1. A TCI state configured for BWP 1 in CC 2 indicates a CC-specific RS for BWP 1 in CC 2.

### [Case 2]

FIG. 6B shows an example in which a TCI state in the CC-common TCI state pool indicates the CC-specific RS. A TCI state configured for BWP 1 in CC 1 indicates (the same RS ID for) a CC-specific RS for BWP 1 in CC 1 and a CC-specific RS for BWP 1 in CC 2. The TCI state configured for BWP 1 in CC 1 may not include a BWP/CC ID.

In both of case 1 and case 2, the TCI state may indicate a CC-common (BWP/CC-common) RS (for example, a QCL type D RS of a CSI-RS with repetition) on each BWP/CC.

### [Case 1]

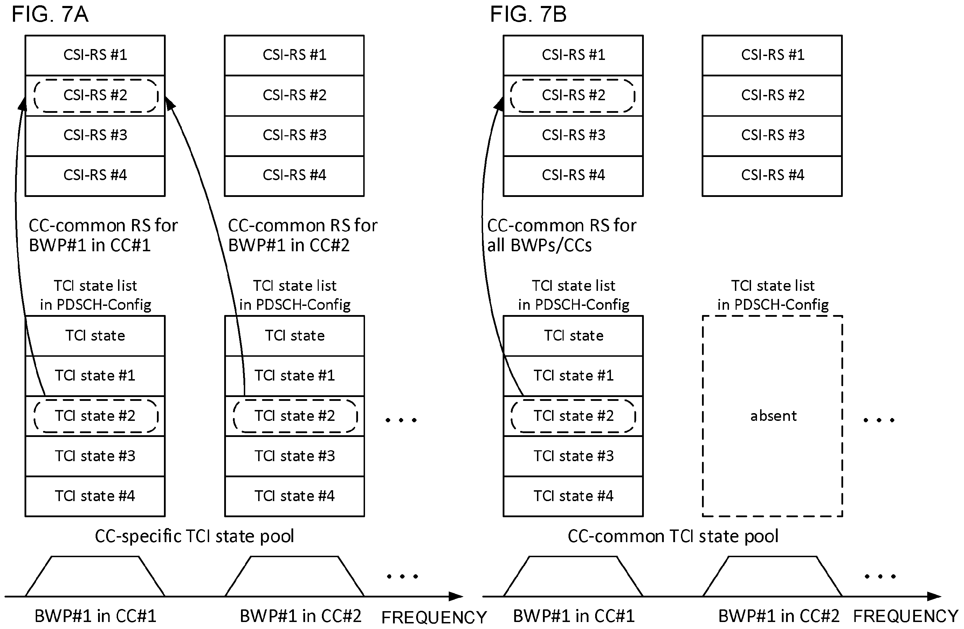

FIG. 7A shows an example in which a TCI state in the CC-specific TCI state pool indicates the CC-common RS. A TCI state configured for BWP 1 in CC 1 indicates a CC-common RS for BWP 1 in CC 1, and a TCI state configured for BWP 1 in CC 2 indicates a (same) CC-common RS for BWP 1 in CC 2.

### [Case 2]

FIG. 7B shows an example in which a TCI state in the CC-common TCI state pool indicates the CC-common RS. A TCI state configured for BWP 1 in CC 1 indicates a CC-common RS for all CCs/BWPs.

In the present disclosure, the TCI state may include a QCL type A RS/QCL type D RS, may include a QCL type A RS for frequency range (FR) 1, or may include a QCL type A RS/QCL type D RS for FR2.

For pathloss measurement in the unified TCI framework, a case that a PL-RS (configured for pathloss calculation) is included in a UL TCI state or a joint TCI state or a case that the PL-RS is associated with the UL TCI state or the joint TCI state is under study. This association may be configured/indicated by an RRC IE/MAC CE.

A case that a TPC parameter (P0, alpha, closed-loop index 1) except the PL-RS is associated with a UL TCI state or a joint TCI state for a PUCCH/PUSCH/SRS is under study. A case that sets of P0, alpha, and closed-loop index are separately configured for the respective PUCCH/PUSCH/SRS is under study.

However, a method for determining a TCI state/PL-RS/TPC parameter for each cell/CC/BWP of a plurality of cells/CCs/BWPs in a case where one or more TCI state pools are configured is indefinite. Unless such a determination method is definite, throughput/communication quality reduction may occur.

Thus, the inventors of the present invention came up with the idea of a method for determining a TCI state/PL-RS/TPC parameter for one or more TCI state pools and a plurality of cells.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate (or specify), select, configure, update, determine, and the like may be interchangeably interpreted. In the present disclosure, "support," "control," "controllable," "operate," and "operable" may be interchangeably interpreted.

In the present disclosure, radio resource control (RRC), an RRC parameter, an RRC message, a higher layer parameter, an information element (IE), and configuration may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a sub-set, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (COntrol REsource SET (CORESET)), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, or a PUCCH resource group), a resource (for example, a reference signal resource or an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a common beam, a common TCI, a common TCI state, a unified TCI, a unified TCI state, a TCI state applicable to DL and UL, a TCI state applied to a plurality (multiple types) of channels/RSs, a TCI state applicable to multiple types of channels/RSs, and a PL-RS may be interchangeably interpreted.

In the present disclosure, a plurality of TCI states configured by RRC, a plurality of TCI states activated by a MAC CE, a pool, a TCI state pool, an active TCI state pool, a common TCI state pool, a joint TCI state pool, a separate TCI state pool, a UL common TCI state pool, a DL common TCI state pool, a common TCI state pool configured/activated by RRC/MAC CE, and TCI state information may be interchangeably interpreted.

In the present disclosure, a DL TCI, a DL-only TCI, a separate DL-only TCI, a DL common TCI, a DL unified TCI, a common TCI, and a unified TCI may be interchangeably interpreted. In the present disclosure, a UL TCI, a UL-only TCI, a separate UL-only TCI, a UL common TCI, a UL unified TCI, a common TCI, and a unified TCI may be interchangeably interpreted.

In the present disclosure, configuration/indication/update of a separate TCI state, configuration/indication of a DL-only TCI state, configuration/indication/update of a UL-only TCI state, and configuration/indication/update of a TCI state for DL and UL may be interchangeably interpreted.

In the present disclosure, a case of a joint TCI pool and a case where a joint TCI pool has been configured may be interchangeably interpreted. In the present disclosure, a case of a separate TCI pool and a case where a separate TCI pool has been configured may be interchangeably interpreted.

In the present disclosure, the case where the joint TCI pool has been configured, a case where a TCI pool configured for DL and a TCI pool configured for UL are in common, a case where a TCI pool for both DL and UL has been configured, and a case where one TCI pool (one set of TCIs) has been configured may be interchangeably interpreted.

In the present disclosure, the case where the separate TCI pool has been configured, a case where a TCI pool configured for DL and a TCI pool configured for UL are different from each other, a case where a DL TCI pool (a first TCI pool, a first TCI set) and a UL TCI pool (a second TCI pool, a second TCI set) have been configured, a case where a plurality of TCI pools (a plurality of sets of TCIs) have been configured, and a case where a DL TCI pool has been configured may be interchangeably interpreted. When a DL TCI pool has been configured, a UL TCI pool may be equal to the configured TCI pool.

In the present disclosure, a channel/RS to which the common TCI is applied may be a PDSCH/HARQ-ACK information/PUCCH/PUSCH/CSI-RS/SRS.

In the present disclosure, an indicated CC (cell), an indicated CC (cell)/BWP, and a CC (cell)/BWP indicated by a MAC CE may be interchangeably interpreted. In the present disclosure, a CC (cell) and a CC (cell)/BWP may be interchangeably interpreted.

### (Radio Communication Method)

In the present disclosure, a TCI state, a unified TCI state, a UL/DL TCI state for joint TCI indication, a UL-only TCI state for separate TCI indication, and a DL-only TCI state for separate TCI indication may be interchangeably interpreted.

In respective diagrams of the present disclosure, the unified TCI state is sometimes simply represented as a TCI state.

In the respective diagrams of the present disclosure, examples in which a (unified/joint) TCI state and a DL TCI state indicate a CSI-RS, and a UL TCI state indicates an SRS are mentioned, but the respective diagrams are not limited to these RSs. For example, the (unified/joint) TCI state and the DL TCI state may indicate an SSB, or the UL TCI state may indicate a CSI-RS or an SSB.

As a new RRC parameter, a unified TCI state/unified TCI state list/unified TCI state pool may be introduced. As the new RRC parameter, a new BWP/CC list indicating a set of BWPs/CCs may be introduced.

### <First Embodiment>

This embodiment relates to a unified TCI state in CA for a TCI state pool.

### <<Aspect 1-1>>

This aspect relates to a unified TCI state in CA for a DL/UL separate TCI state pool.

When joint TCI indication is applied, one list of TCI states may be configured for each of BWPs/CCs (for example, FIGS. 3A and 3B to FIGS. 7A and 7B mentioned above).

When separate TCI indication is applied, two lists of TCI states may be configured for each BWP/CC.

The TCI state may indicate a CC-specific (BWP/CC-specific) RS (for example, a QCL type A RS) on each BWP/CC.

### [Case 1]

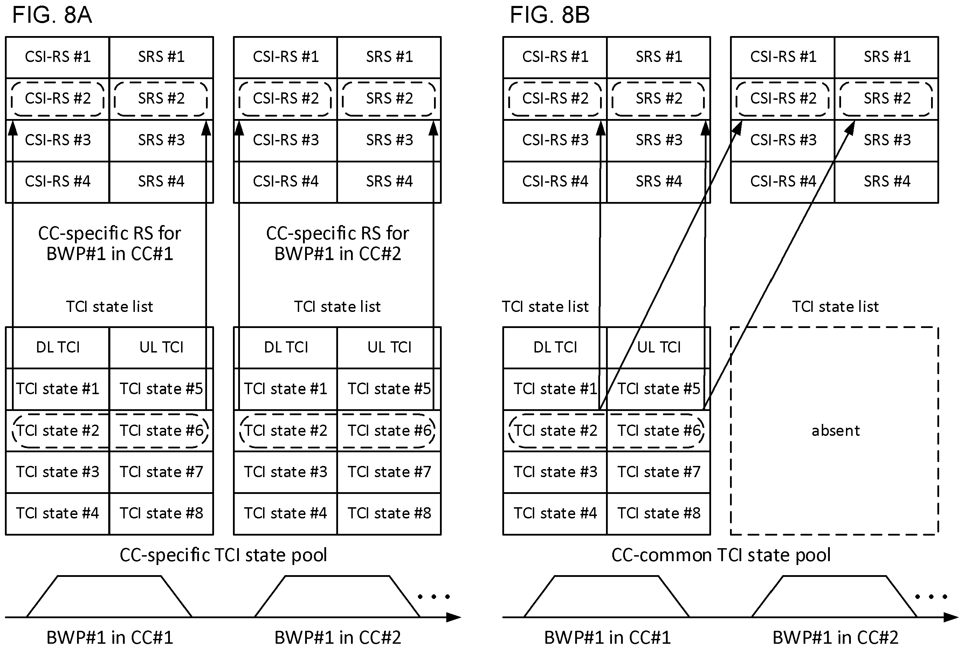

FIG. 8A shows an example in which a TCI state in a CC-specific TCI state pool indicates the CC-specific RS. A TCI state in a separate DL TCI state pool and a TCI state in a separate UL TCI state pool configured for BWP 1 in CC 1 indicate a DL CC-specific RS and a UL CC-specific RS for BWP 1 in CC 1, respectively. A TCI state in a separate DL TCI state pool and a TCI state in a separate UL TCI state pool configured for BWP 1 in CC 2 indicate a DL CC-specific RS and a UL CC-specific RS for BWP 1 in CC 2, respectively.

### [Case 2]

FIG. 8B shows an example in which a TCI state in a CC-common TCI state pool indicates the CC-specific RS. A TCI state in a separate DL TCI state pool configured for BWP 1 in CC 1 indicates a DL CC-specific RS for BWP 1 in CC 1 and a DL CC-specific RS for BWP 1 in CC 2. A TCI state in a separate UL TCI state pool configured for BWP 1 in CC 1 indicates a UL CC-specific RS for BWP 1 in CC 1 and a UL CC-specific RS for BWP 1 in CC 2.

The TCI state may indicate a CC-common (BWP/CC-common) RS (for example, a QCL type A RS) on each BWP/CC.

### [Case 1]

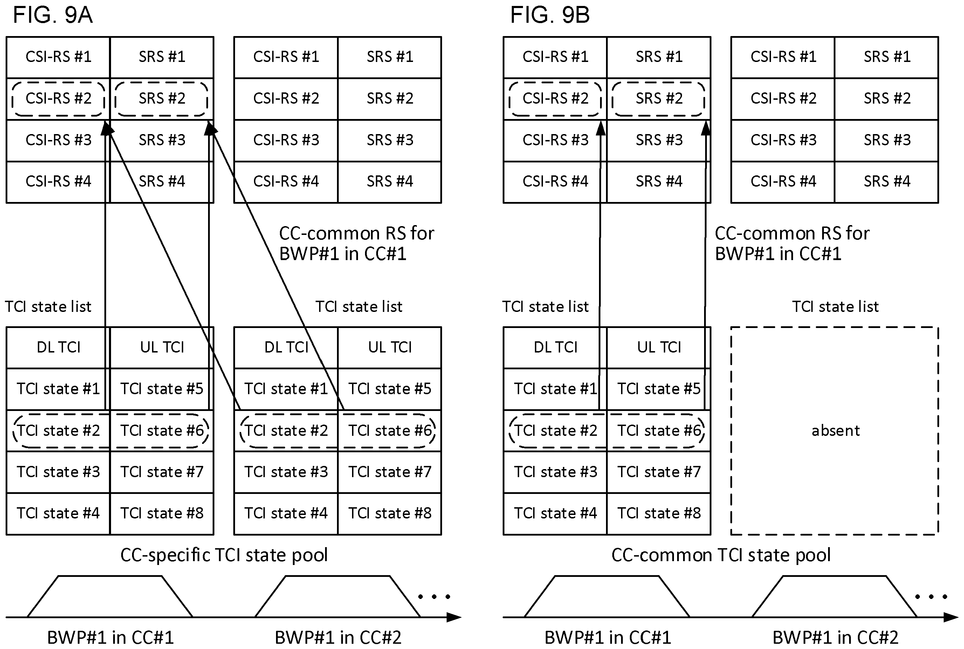

FIG. 9A shows an example in which a TCI state in the CC-specific TCI state pool indicates the CC-common RS. A TCI state in a separate DL TCI state pool configured for BWP 1 in CC 1 and a TCI state in a separate DL TCI state pool configured for BWP 1 in CC 2 indicate a DL CC-common RS for BWP 1 in CC 1. A TCI state in a separate UL TCI state pool configured for BWP 1 in CC 1 and a TCI state in a separate UL TCI state pool configured for BWP 1 in CC 2 indicate a UL CC-common RS for BWP 1 in CC 1.

### [Case 2]

FIG. 9B shows an example in which a TCI state in the CC-common TCI state pool indicates the CC-common RS. A TCI state in a separate DL TCI state pool and a TCI state in a separate UL TCI state pool configured for BWP 1 in CC 1 indicate a DL CC-common RS and a UL CC-common RS for BWP 1 in CC 1, respectively.

### <<Aspect 1-2>>

This aspect relates to a constraint on a joint/separate TCI state pool.

In a set of BWPs/CCs, at least one of constraint 1 and constraint 2 below may be defined.

### [Constraint 1]

Only any one of joint TCI indication (one TCI state list for DL/UL joint TCI states for each BWP/CC) and separate TCI indication (two TCI state lists for DL-only separate TCI states and UL-only separate TCI states for each BWP/CC) can be configured/indicated for all BWPs/CCs in the set of BWPs/CCs.

A case that a UE does not assume that different types of joint TCI indication/list and separate TCI indication/list are configured on different BWPs/CCs in the set of BWPs/CCs may be defined.

### [Constraint 2]

For each BWP/CC, any one of joint TCI indication (one TCI state list for DL/UL joint TCI states for each BWP/CC) and separate TCI indication (two TCI state lists for DL-only separate TCI states and UL-only separate TCI states for each BWP/CC) can be configured/indicated.

The set of BWPs/CCs may be RRC configured explicitly (by, for example, a BWP/CC list), or may be derived implicitly. The set of BWPs/CCs may be all BWPs and CCs in the same frequency band.

When the set of BWPs/CCs are not configured explicitly, the set of BWPs/CCs may be all BWPs and CCs in the same frequency band. A plurality of sets of BWPs/CCs may be configured. Operation for a BWP/CC in the set of BWPs/CCs and operation for a BWP/CC outside the set of BWPs/CCs may be different from each other. For example, the UE may assume constraint 1 for the BWP/CC in the set of BWPs/CCs, and may assume constraint 2 for the BWP/CC outside the set of BWPs/CCs. For example, the UE may use a unified TCI state for the BWP/CC in the set of BWPs/CCs, and may use a TCI state in Rel. 15/16 for the BWP/CC outside the set of BWPs/CCs. The UE may ignore, for the BWP/CC in the set of BWPs/CCs, the TCI state in Rel. 15/16.

In the set of BWPs/CCs, the number of TCI state pools may be 1.

### <<Aspect 1-3>>

This aspect relates to activation/indication of a TCI state in a TCI state pool.

For which CC the TCI state is activated/indicated by a MAC CE may follow at least one of case 1 and case 2 below.

### [Case 1]

For a CC-specific TCI state pool, one MAC CE may indicate an active TCI state for each of BWPs/CCs (in a manner similar to that of Rel. 15).

For the CC-specific TCI state pool, one MAC CE may indicate an active TCI state for a plurality of BWPs/CCs in a set of BWPs/CCs (in a manner similar to that of Rel. 16).

### [Case 2]

For a CC-common TCI state pool, one MAC CE may indicate an active TCI state for each of BWPs/CCs (in a manner similar to that of Rel. 15). In case 2, an active TCI state is required only in one BWP/CC, and thus this option may be absent.

For the CC-common TCI state pool, one MAC CE may indicate an active TCI state for a plurality of BWPs/CCs in a set of BWPs/CCs (in a manner similar to that of Rel. 16). In case 2, an active TCI state is required only in one BWP/CC, and thus this option may be absent.

For the CC-common TCI state pool, one MAC CE may indicate one active TCI state for one BWP/CC in the set of BWPs/CCs. The one BWP/CC may be a BWP/CC for which a TCI state list has been configured. A TCI state list for DL-only TCI states and a TCI state list for UL-only TCI states may be configured in one same BWP/CC. A TCI state list for DL-only TCI states and a TCI state list for UL-only TCI states may be configured in respective different BWPs/CCs.

The MAC CE in this aspect may follow at least one of MAC CE 1 to MAC CE 3 below.
[MAC CE 1] One MAC CE indicates all of a DL/UL joint TCI state for joint TCI indication and a DL-only TCI state and UL-only TCI state for separate TCI indication.
[MAC CE 2] One MAC CE indicates one of the DL/UL joint TCI state for the joint TCI indication and the DL-only TCI state and UL-only TCI state for the separate TCI indication.
[MAC CE 3] One MAC CE indicates one of the DL/UL joint TCI state for the joint TCI indication, the DL-only TCI state for the separate TCI indication, and the UL-only TCI state for the separate TCI indication.

For which CC the TCI state is activated/indicated by DCI may follow at least one of case 1 and case 2 below. The DCI may be beam indication DCI.

### [Case 1]

For a CC-specific TCI state pool, one piece of DCI may indicate an active TCI state for each of BWPs/CCs (in a manner similar to that of Rel. 15).

For the CC-specific TCI state pool, one piece of DCI may indicate an active TCI state for a plurality of BWPs/CCs in a set of BWPs/CCs (in a manner similar to that of Rel. 16).

The beam indication DCI may be present on an arbitrary BWP/CC for which a TCI state list has been configured. In this case, the beam indication DCI can be transmitted flexibly.

The beam indication DCI may be present on some specific BWPs/CCs in BWPs/CCs for which a TCI state list has been configured. The specific BWP/CC may be a BWP/CC with the lowest BWP/CC ID out of the BWPs/CCs for which the TCI state list has been configured. In this case, complexity/load of the UE can be suppressed.

### [Case 2]

For a CC-common TCI state pool, one piece of DCI may indicate an active TCI state for each of BWPs/CCs (in a manner similar to that of Rel. 15). In case 2, an active TCI state is absent on another BWP/CC, and thus this option may be absent.

For the CC-common TCI state pool, one piece of DCI may indicate one active TCI state for one BWP/CC in a set of BWPs/CCs, and may indicate an RS index (TCI state ID) on another BWP/CC in the set.

The beam indication DCI may be present on a BWP/CC for which a TCI state list has been configured or a TCI state has been activated.

The beam indication DCI may be present on another BWP/CC for which the TCI state list has not been configured or the TCI state has not been activated. That is, the beam indication DCI may perform cross-CC beam indication.

A TCI state list for DL-only TCI states and a TCI state list for UL-only TCI states may be configured in one same BWP/CC. A TCI state list for DL-only TCI states and a TCI state list for UL-only TCI states may be configured in respective different BWPs/CCs.

The DCI in this aspect may follow at least one of DCI code point 1 to DCI code point 3 below.
[DCI Code Point 1] One DCI code point indicates one DL/UL joint TCI state for joint TCI indication.
[DCI Code Point 2] One DCI code point indicates one pair of a DL-only TCI state and UL-only TCI state for separate TCI indication.
[DCI Code Point 3] One DCI code point indicates one of the DL-only TCI state for the separate TCI indication and the UL-only TCI state for the separate TCI indication.

DCI on a certain CC may activate a TCI state for another CC. In this case, the TCI state can be indicated flexibly. The DCI on the certain CC may not activate the TCI state for another CC. In this case, a load of the UE can be suppressed.

According to this embodiment, the UE can appropriately determine a unified TCI state.

### <Second Embodiment>

This embodiment relates to indication of a unified TCI state in CA.

In a first embodiment, one MAC CE/DCI indicates a TCI state ID. In Rel. 17, one TCI state field indicates one or two TCI matters in separate TCI indication. If one of DL-only and UL-only has been indicated, UE operation becomes an issue.

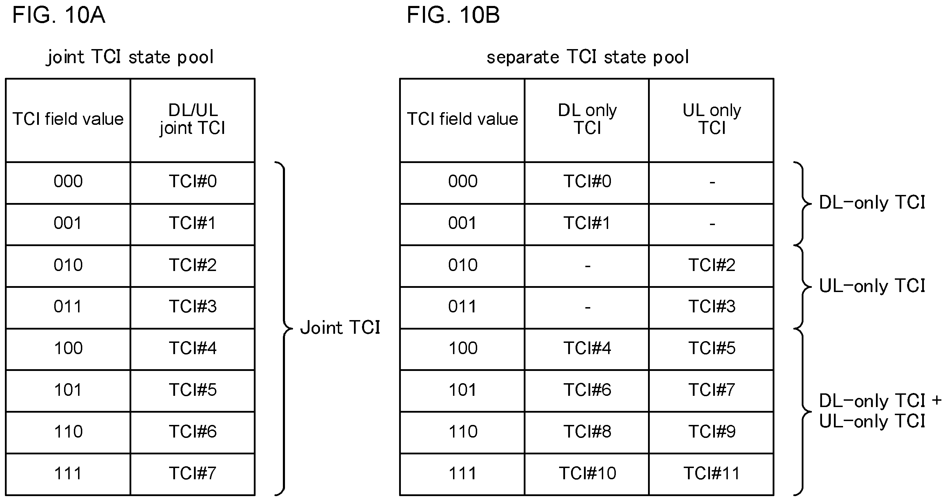

FIG. 10A shows an example of an association between code points of the TCI state field and DL/UL TCI states in a case where a TCI state list for joint TCI indication has been configured.

FIG. 10B shows an example of an association between code points of the TCI state field, DL-only TCI states, and UL-only TCI states in a case where a TCI state list for separate TCI indication has been configured. The code points may be associated only with DL TCI states, may be associated only with UL TCI states, or may be associated with both DL TCI states and UL TCI states.

Switching between the TCI state list for the joint TCI indication and the TCI state list for the separate TCI indication may be performed by an RRC IE/MAC CE.

If, in the separate TCI indication, one of the DL-only and UL-only TCI states has been indicated by DCI, a DL TCI state/UL TCI state may follow at least one of case 1 and case 2 below. The DCI may be DCI format 1_1/DCI format 1_2. The DCI may be accompanied by data scheduling, or may not be accompanied by the data scheduling.

### [Case 1]

If a pair of a UL-only TCI state and a DL-only TCI state has been indicated, a UE may apply, in a set of BWPs/CCs, a corresponding UL TCI state and a corresponding DL TCI state.

If the DL-only TCI state has been indicated, the UE may apply a corresponding DL TCI state in the set of BWPs/CCs, and may retain a current UL TCI state.

If the UL-only TCI state has been indicated, the UE may apply a corresponding UL TCI state in the set of BWPs/CCs, and may retain a current DL TCI state.

### [Case 2]

If a pair of a UL-only TCI state and a DL-only TCI state has been indicated, the UE may apply, in a set of BWPs/CCs, a corresponding UL TCI state (associated RS for each BWP/CC) and a corresponding DL TCI state (associated RS for each BWP/CC).

If the DL-only TCI state has been indicated, in the set of BWPs/CCs, the UE may apply a corresponding DL TCI state (associated RS for each BWP/CC), and may retain a current UL TCI state (associated RS for each BWP/CC).

If the UL-only TCI state has been indicated, in the set of BWPs/CCs, the UE may apply a corresponding UL TCI state (associated RS for each BWP/CC), and may retain a current DL TCI state (associated RS for each BWP/CC).

If, in the joint TCI indication, a DL/UL TCI state has been indicated by DCI, the DL/UL TCI state may follow at least one of case 1 and case 2 below. The DCI may be DCI format 1_1/DCI format 1_2. The DCI may be accompanied by data scheduling, or may not be accompanied by the data scheduling.

### [Case 1]

If a UL/DL joint TCI state has been indicated, the UE may apply, in a set of BWPs/CCs, a corresponding UL/DL joint TCI state.

### [Case 2]

If a UL/DL joint TCI state has been indicated, the UE may apply, in a set of BWPs/CCs, a corresponding UL/DL joint TCI state (associated RS for each BWP/CC).

According to this embodiment, the UE can appropriately determine a TCI state in CA when a unified TCI state has been indicated.

### <Third Embodiment>

This embodiment relates to a PL-RS and a TPC parameter in a unified TCI framework in CA.

In the unified TCI framework in the CA, a method for deriving/determining the PL-RS corresponding to the TPC parameter is a challenge for each of BWPs/CCs. As mentioned above, a case that the PL-RS is associated with/included in a UL/joint TCI state is under study. A TCI state pool can be CC-common or CC-specific, and thus how to indicate the PL-RS on each CC is a challenge. In Rel. 15/16, the PL-RS is configured for each BWP in the CC, and a PL-RS for a PUSCH/PUCCH/SRS is present on the same BWP/CC as that for the PUSCH/PUCCH/SRS. However, with respect to a CC-common TCI state pool, when a TCI state list for each BWP/CC is absent, a method for deriving/determining the PL-RS on each CC for a CC-common TCI state is a challenge.

The PL-RS/TPC parameter (for example, a setting/set of P0/alpha/closed-loop indexes) may be derived/determined on the basis of a configured TCI state pool and a TCI state indicated by a MAC CE/DCI. The PL-RS/TPC parameter may follow at least one of case 1 and case 2 below.

### [Case 1]

For a CC-specific TCI state pool, a PL-RS/TPC parameter (for example, a setting/set of P0/alpha/closed-loop indexes) may be determined on the basis of an indicated TCI state on each BWP/CC. The PL-RS may be explicitly configured for/associated with CC-specific TCI state pool configuration for each CC, the PL-RS being accompanied by each piece of QCL/TCI state. The PL-RS may be accompanied by a cell/BWP ID, or may not be accompanied by the cell/BWP ID. The PL-RS/TPC parameter may follow at least one of parameter 1 and parameter 2 below.

### [[Parameter 1]]

At least one of a PL-RS associated with/included in a UL/joint TCI state in each BWP/CC and a TPC parameter (for example, a setting/set of P0/alpha/closed-loop indexes) corresponding to the PL-RS is used for TPC calculation for a configured set of BWPs/CCs (CC-specific PL-RS/CC-specific TPC parameter). A BWP/CC with the PL-RS/the TPC parameter may be different from a BWP/CC for a target PUSCH/PUCCH/SRS.

A PL-RS included in/associated with a TCI state pool for each BWP/CC may be explicitly configured. Only one PL-RS may be configured for each piece of QCL/TCI state, the UE may assume that the PL-RS is present on an indicated CC, and the PL-RS may be used for an arbitrary target CC.

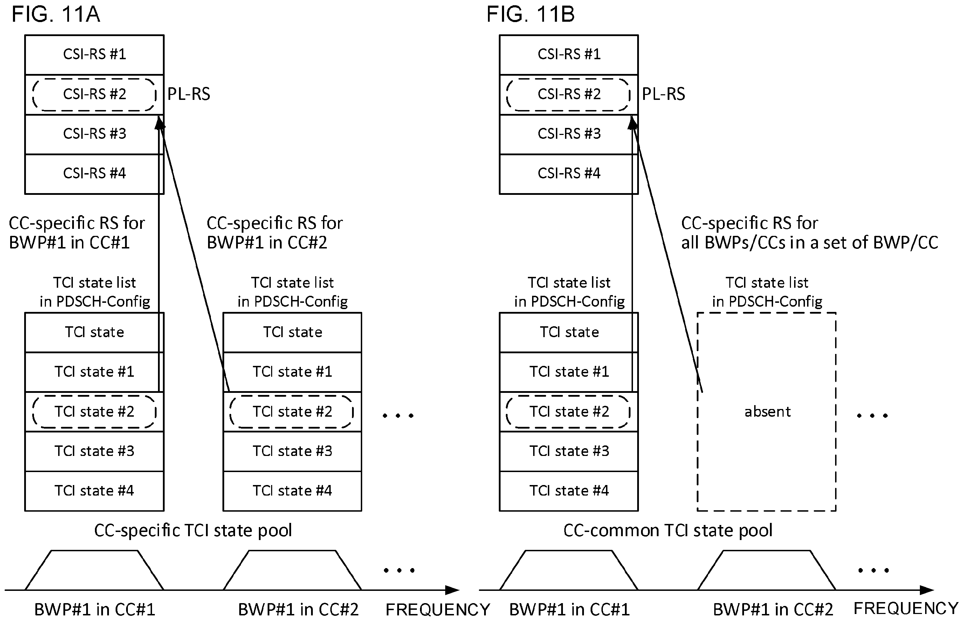

FIG. 11A shows an example (parameter 1) in which, for the CC-specific TCI state pool, PL-RS configuration on each BWP/CC includes one (same) cell/BWP ID (BWP ID = 1, CC ID = 1). Each of a TCI state configured for BWP 1 in CC 1 and a TCI state configured for BWP 1 in CC 2 is associated with/included in a (same) PL-RS for BWP 1 in CC 1.

### [[Parameter 2]]

At least one of a PL-RS associated with/included in a CC-specific RS (QCL type A/D RS) on each BWP/CC and a TPC parameter (for example, a setting/set of P0/alpha/closed-loop indexes) corresponding to the PL-RS is used for TPC calculation for a configured set of BWPs/CCs (CC-common PL-RS/CC-common TPC parameter). A BWP/CC with the PL-RS/the TPC parameter may be the same as a BWP/CC for a target PUSCH/PUCCH/SRS.

A PL-RS included in/associated with a TCI state pool for each BWP/CC may be explicitly configured. Only one PL-RS may be configured for each piece of QCL/TCI state, and the UE may assume that the PL-RS is present on the target CC. The cell/BWP ID may be absent in the PL-RS configuration.

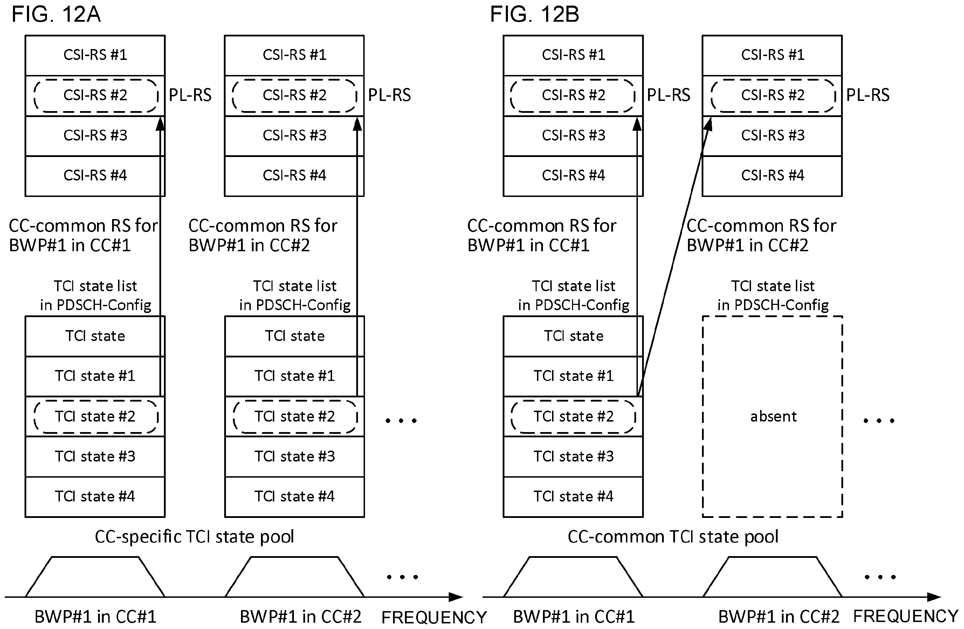

FIG. 12A shows an example (parameter 2) in which, for the CC-specific TCI state pool, PL-RS configuration on a certain BWP/CC (BWP 1 in CC 1) includes or does not include that cell/BWP ID (BWP ID = 1, CC ID = 1). A TCI state configured for BWP 1 in CC 1 is associated with/included in a PL-RS for BWP 1 in CC 1. A TCI state configured for BWP 1 in CC 2 is associated with/included in a PL-RS for BWP 1 in CC 2.

The PL-RS in these examples may be interpreted as a PL-RS and a TPC parameter (for example, a setting/set of P0/alpha/closed-loop indexes).

### [Case 2]

For the CC-common TCI state pool in the unified TCI framework in the CA, a method for deriving/determining a PL-RS for a PUSCH/PUCCH/SRS on each BWP/CC may be defined. When a TCI state pool to be RRC configured is absent in PDSCH configuration (PDSCH-Config) for each BWP/CC, and is replaced with reference to a TCI state pool to be RRC configured in a reference BWP/CC, the PL-RS/TPC parameter (for example, the setting/set of P0/alpha/closed-loop indexes) may be determined on the basis of an indicated TCI state on the reference BWP/CC. The PL-RS/TPC parameter may follow at least one of parameter 1 and parameter 2 below.

### [[Parameter 1]]

At least one of a PL-RS associated with/included in a UL/joint TCI state in the reference BWP/CC and a TPC parameter (for example, a setting/set of P0/alpha/closed-loop indexes) corresponding to the PL-RS is used for TPC calculation for a configured set of BWPs/CCs (CC-specific PL-RS/CC-specific TPC parameter). A BWP/CC with the PL-RS/the TPC parameter may be different from a BWP/CC for a target PUSCH/PUCCH/SRS.

A PL-RS included in/associated with a TCI state pool for the reference BWP/CC may be explicitly configured. Only one PL-RS may be configured for each piece of QCL/TCI state, the UE may assume that the PL-RS is present on an indicated CC, and the PL-RS may be used for an arbitrary target CC.

FIG. 11B shows an example (parameter 1) in which, for the CC-common TCI state pool, PL-RS configuration on each BWP/CC includes one (same) cell/BWP ID. Each of a TCI state configured for BWP 1 in CC 1 and a TCI state configured for BWP 1 in CC 2 is associated with/included in a (same) PL-RS for BWP 1 in CC 1.

### [[Parameter 2]]

At least one of a PL-RS associated with/included in a CC-specific RS (QCL type A/D RS) on each BWP/CC and a TPC parameter (for example, a setting/set of P0/alpha/closed-loop indexes) corresponding to the PL-RS is used for TPC calculation for a configured set of BWPs/CCs (CC-common PL-RS/CC-common TPC parameter). A BWP/CC with the PL-RS/the TPC parameter may be the same as a BWP/CC for a target PUSCH/PUCCH/SRS.

A PL-RS included in/associated with a TCI state pool for the reference BWP/CC may be explicitly configured. Only one PL-RS may be configured for each piece of QCL/TCI state, and the UE may assume that the PL-RS is present on the target CC. The cell/BWP ID may be absent in the PL-RS configuration.

FIG. 12B shows an example (parameter 2) in which, for the CC-common TCI state pool, PL-RS configuration on a certain BWP/CC (BWP 1 in CC 1) does not include a cell/BWP ID. A TCI state configured for BWP 1 in CC 1 is associated with/included in a PL-RS for BWP 1 in CC 1 and a PL-RS for BWP 1 in CC 2.

The PL-RS in these examples may be interpreted as a PL-RS and a TPC parameter (for example, a setting/set of P0/alpha/closed-loop indexes).

### <<PL Configuration>>

In QCL information (QCL-Info), the PL-RS may be configured, or may not be configured.

New QCL information (for example, QCL-Info_r17) may include the PL-RS. If a BWP/CC ID (bwp-Id/cell) is absent in QCL-Info_r17 associated with the PL-RS, the UE may assume that the PL-RS is present in a BWP/CC to which a TCI state is applied. Otherwise, the UE may assume that the PL-RS is present in an indicated BWP/CC. When parameter 2 mentioned above has been defined, the BWP/CC ID may not always be present in QCL-Info_r17 associated with the PL-RS.

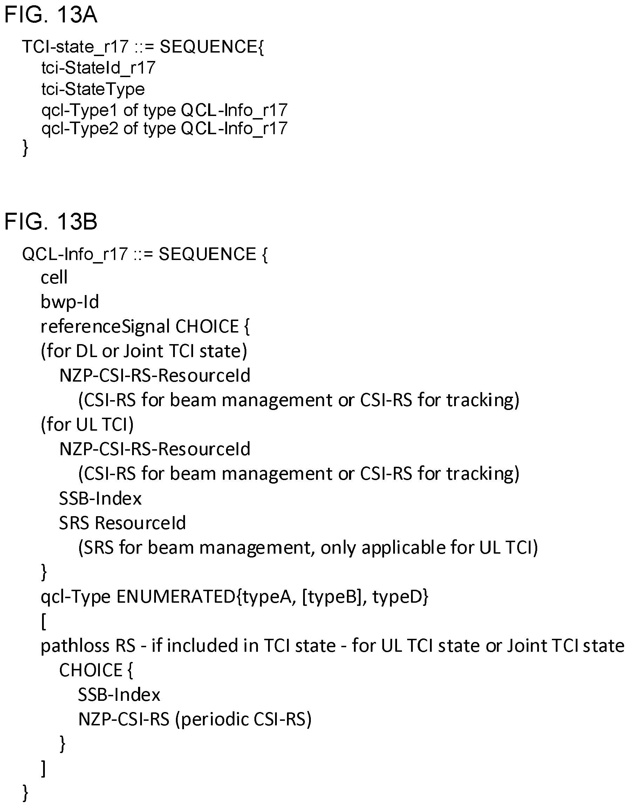

In an example of FIG. 13A, QCL-Info_r17 includes at least one of a TCI state ID (tci-StateId_r17), a TCI state type (tci-StateType), QCL type 1 (qcl-Type1), and QCL type 2 (qcl-Type2). The PL-RS may be configured in any one of qcl-Type1 and qcl-Type2. The PL-RS may not be required to be configured in both of qcl-Type1 and qcl-Type2.

In an example of FIG. 13B, QCL-Info_r17 includes at least one of a cell ID (cell), a BWP ID (bwp-Id), a reference signal (source RS, referenceSignal), a QCL type (qcl-Type), and a pathloss RS (pathlossRS). referenceSignal for a DL TCI state or a joint TCI state may include a non-zero power (NZP) CSI-RS resource ID (NZP-CSI-RS-ResourceId (beam management CSI-RS or tracking CSI-RS)). referenceSignal for a UL TCI state may include one of NZP-CSI-RS-ResourceId (beam management CSI-RS or tracking CSI-RS), an SSB index (SSB-Index), and an SRS resource ID (SRS-ResourceId (beam management SRS, which is applicable only to the UL TCI state)). qcl-Type may include one of typeA, typeB, and typeD. If pathlossRS is included in the UL TCI state or the joint TCI state, pathlossRS may include one of SSB-Index and NZP-CSI-RS-ResourceId (periodic CSI-RS).

New QCL information (for example, QCL-Info_r17) may include the PL-RS. If a BWP/CC ID (bwp-Id/cell) is absent in the PL-RS, the UE may assume that the PL-RS is present in a BWP/CC to which a TCI state is applied. Otherwise, the UE may assume that the PL-RS is present in an indicated BWP/CC. When parameter 2 mentioned above has been defined, the BWP/CC ID may not always be present in the PL-RS. An explicit RRC parameter for the BWP/CC ID may not be required.

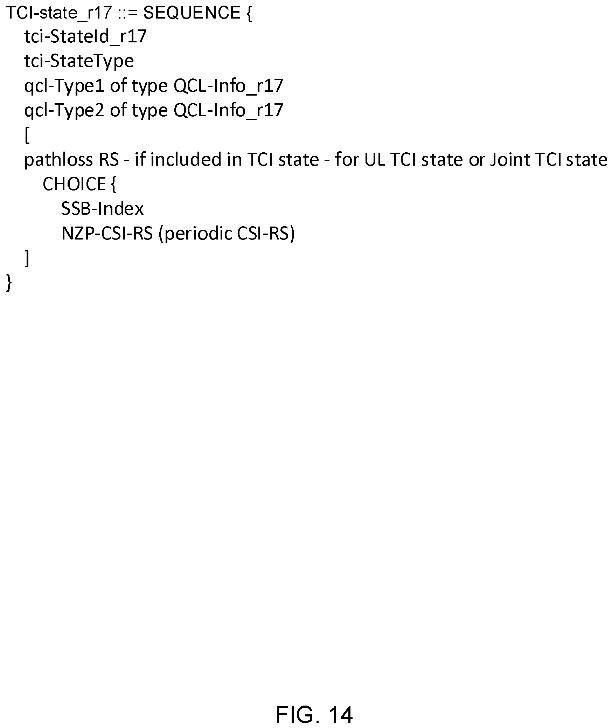

In an example of FIG. 14, the PL-RS does not include the BWP/CC ID. QCL-Info_r17 includes at least one of tci-StateId_r17, tci-StateType, qcl-Type1, qcl-Type2, and pathlossRS. If pathlossRS is included in the UL TCI state or the joint TCI state, pathlossRS may include one of SSB-Index and NZP-CSI-RS-ResourceId (periodic CSI-RS). pathlossRS may include a BWP/CC ID (bwp-Id/cell), or may not include the BWP/CC ID.

### <Other Embodiments>

### <<UE Capability Information/Higher Layer Parameter>>

A higher layer parameter (RRC IE)/UE capability corresponding to a function (characteristic, feature) in each embodiment described above may be defined. The higher layer parameter may indicate whether the function is enabled. The UE capability may indicate whether a UE supports the function.

A UE for which the higher layer parameter corresponding to the function has been configured may perform the function. A "case that a UE for which the higher layer parameter corresponding to the function has not been configured does not perform the function (for example, follows Rel. 15/16)" may be defined.

A UE that has reported/transmitted the UE capability indicating that the function is supported may perform the function. A "case that a UE that has not reported the UE capability indicating that the function is supported does not perform the function (for example, follows Rel. 15/16)" may be defined.

When a UE has reported/transmitted the UE capability indicating that the function is supported, and the higher layer parameter corresponding to the function has been configured, the UE may perform the function. A "case that when a UE does not report/transmit the UE capability indicating that the function is supported or when the higher layer parameter corresponding to the function is not configured, the UE does not perform the function (for example, follows Rel. 15/16)" may be defined.

Which embodiment/option/choice/function out of a plurality of embodiments described above is used may be configured by a higher layer parameter, may be reported by a UE as a UE capability, may be defined in specifications, or may be determined by a reported UE capability and higher layer parameter configuration.

The UE capability may indicate whether at least one function of the following is supported.
- Unified TCI framework
- One or both of joint TCI and separate TCI
- One or both of CC-common TCI state pool and CC-specific TCI state pool
- One or both of CC-common RS and CC-specific RS

The UE capability may indicate at least one value of the following.
- Number (maximum number) of TCI states configured for each BWP/each CC/each band/each UE
- Number (maximum number) of active TCI states for each BWP/each CC/each band/each UE
- Number (maximum number) of TCI state pools (TCI state lists) across set of BWPs/CCs

According to the UE capability/higher layer parameter described above, the UE can achieve the above-described function while maintaining compatibility with existing specifications.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

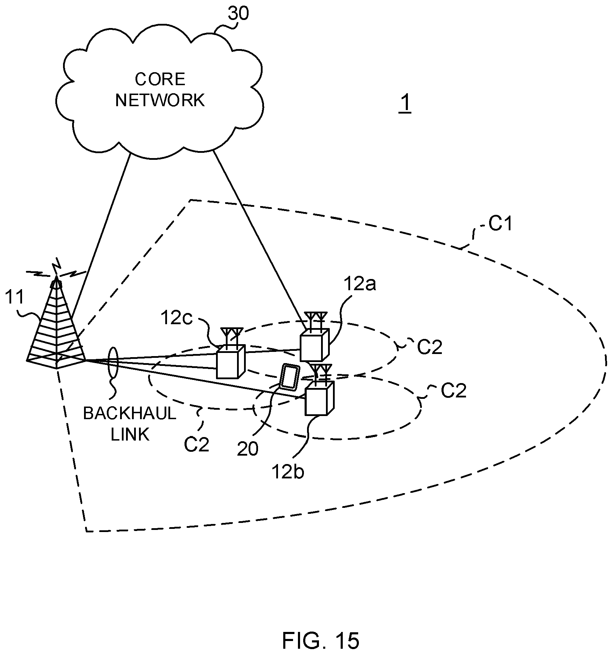

FIG. 15 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

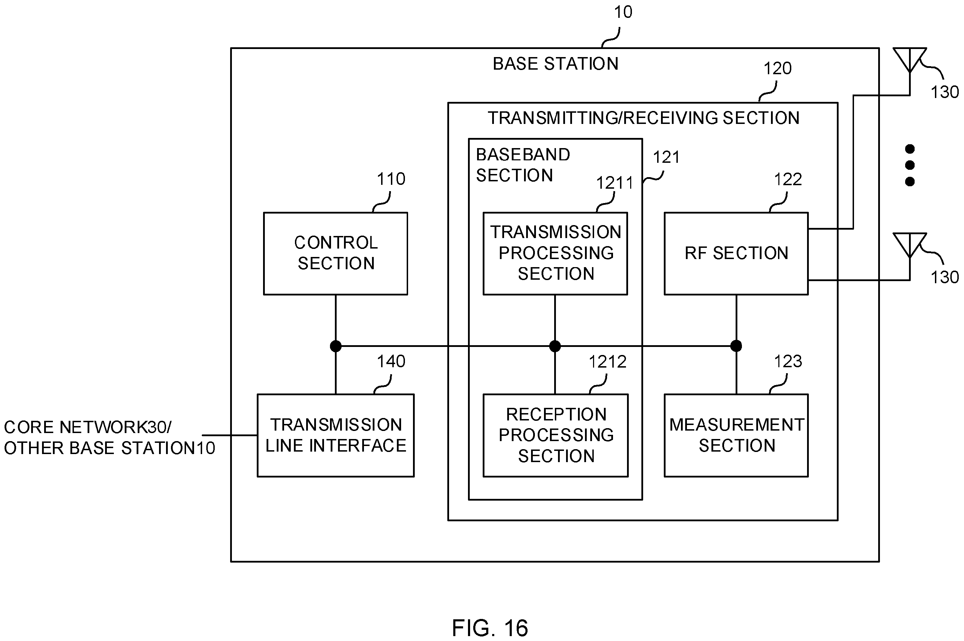

FIG. 16 is a diagram to show an example of a structure of a base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit one or more transmission configuration indication (TCI) state lists for downlink and uplink in one or more cells of a plurality of cells, and may transmit an indication of one or more TCI states in the one or more TCI state lists. The control section 110 may apply the one or more TCI states to a part or all of the plurality of cells.

The transmitting/receiving section 120 may transmit one or more transmission configuration indication (TCI) state lists for uplink in one or more cells of a plurality of cells, and may transmit an indication of one or more TCI states in the one or more TCI state lists. The control section 110 may apply, to a part or all of the plurality of cells, at least one parameter of a pathloss reference signal and a transmission power control parameter based on the one or more TCI states.

### (User Terminal)

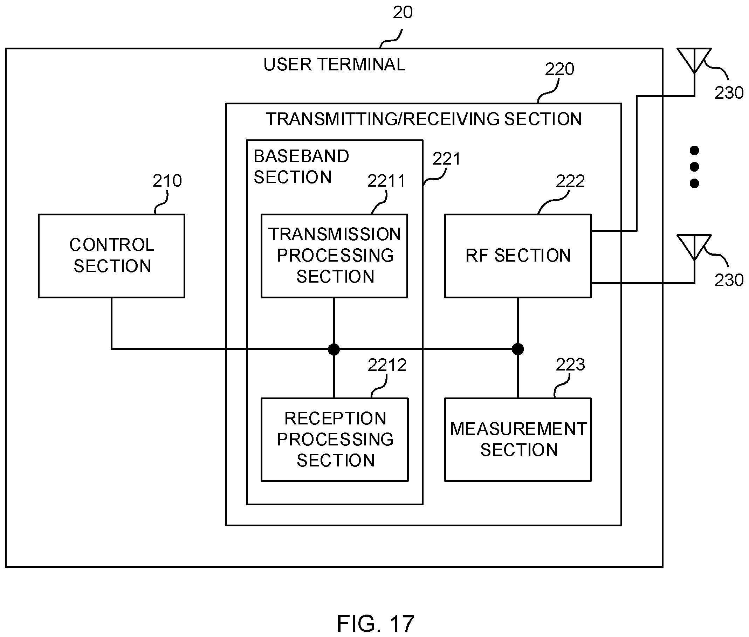

FIG. 17 is a diagram to show an example of a structure of a user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive one or more transmission configuration indication (TCI) state lists (for example, joint TCI state pools/separate TCI state pools) for downlink and uplink in one or more cells of a plurality of cells (for example, a set of CCs/BWPs), and may receive an indication (for example, a MAC CE/DCI) of one or more TCI states in the one or more TCI state lists. The control section 210 may apply the one or more TCI states to a part or all of the plurality of cells.

The one or more TCI state lists may indicate a list of TCI states for each of the plurality of cells (for example, a CC-specific TCI state pool) or a list of TCI states common to the plurality of cells (for example, a CC-common TCI state pool).

The one or more TCI states may indicate a reference signal on one cell of the plurality of cells (for example, a CC-specific RS) or a reference signal common to the plurality of cells (for example, a CC-common RS) .

The one or more TCI state lists may be a downlink TCI state list (for example, a separate DL TCI state pool) and an uplink TCI state list (for example, a separate UL TCI state pool). The one or more TCI states may be a downlink TCI state and an uplink TCI state.

The transmitting/receiving section 220 may receive one or more transmission configuration indication (TCI) state lists (for example, joint TCI state pools/separate TCI state pools) for uplink in one or more cells of a plurality of cells (for example, a set of CCs/BWPs), and may receive an indication (for example, a MAC CE/DCI) of one or more TCI states in the one or more TCI state lists. The control section 210 may apply, to a part or all of the plurality of cells, at least one parameter of a pathloss reference signal (for example, a PL-RS) and a transmission power control parameter (for example, a setting for PO/alpha/closed-loop index) based on the one or more TCI states.

The one or more TCI state lists may be a list of TCI states for each of the plurality of cells (for example, a CC-specific TCI state pool) or a list of TCI states common to the plurality of cells (for example, a CC-common TCI state pool).

The parameter may be a parameter on one cell of the plurality of cells (for example, a CC-specific PL-RS/CC-specific TPC parameter) or a parameter common to the plurality of cells (for example, a CC-common PL-RS/CC-common TPC parameter).

The parameter may be included in the one or more TCI states, or may be associated with the one or more TCI states.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

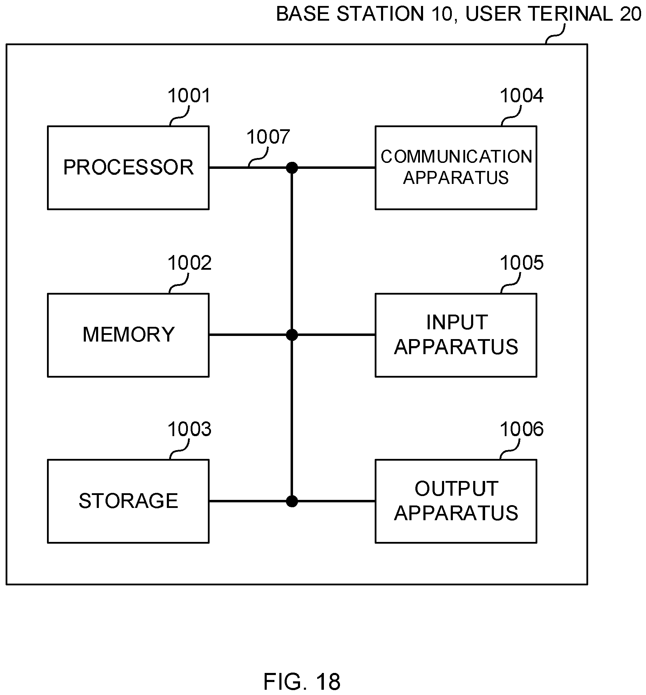

For example, a base station, a user terminal, and so on according to one embodiment of the present disclosure may function as a computer that executes the processes of the radio communication method of the present disclosure. FIG. 18 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object refers to a mobile object, of which moving speed is any speed, and also includes, as a matter of course, a case in which the moving object is stationary. For example, the moving object includes, but is not limited to, a vehicle, a transport vehicle, an automobile, a motorcycle, a bicycle, a connected car, an excavator, a bulldozer, a wheel loader, a dump truck, a forklift, a train, a bus, a handcart, a rickshaw, a ship and other watercraft, an airplane, a rocket, an artificial satellite, a drone, a multicopter, a quadcopter, a hot air balloon, and an object loaded on these. The moving object may be a moving object that autonomously moves based on an operation command.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

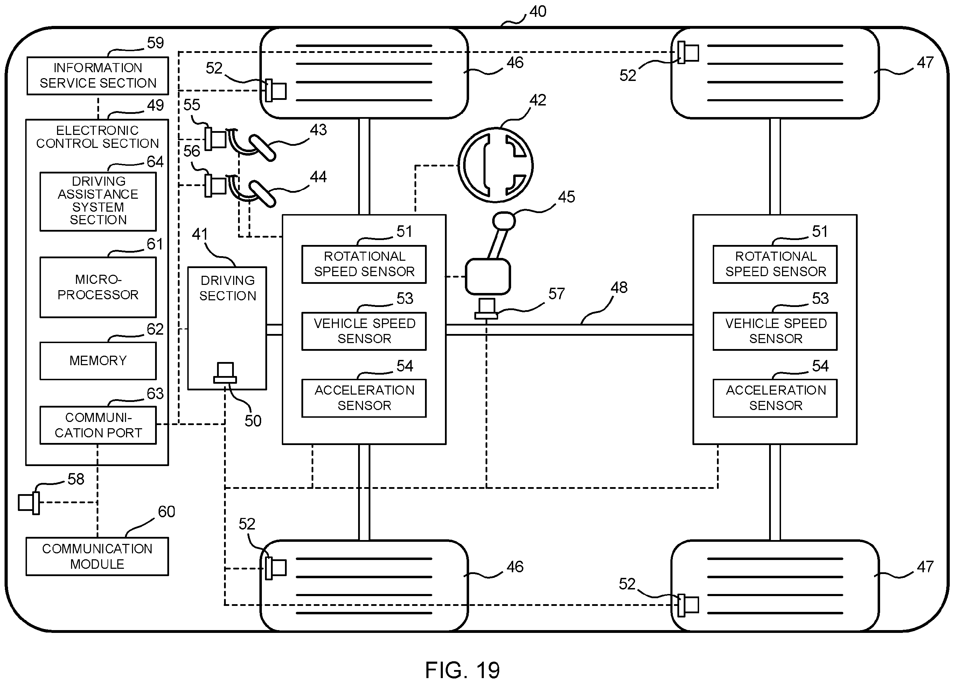

FIG. 19 is a diagram to show an example of a vehicle according to one embodiment. As shown in FIG. 19, a vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, am input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV)) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, and information obtained based on the signals, to the external apparatus via radio communication.

The communication module 60 receives various pieces of information (traffic information, signal information, inter-vehicle distance information, and the like) transmitted from the external apparatus, and displays the various pieces of information on the information service section 59 included in the vehicle. The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives one or more transmission configuration indication (TCI) state lists for uplink in one or more cells of a plurality of cells and that receives an indication of one or more TCI states in the one or more TCI state lists; and
a control section that applies, to a part or all of the plurality of cells, at least one parameter of a pathloss reference signal and a transmission power control parameter based on the one or more TCI states.

2. The terminal according to claim 1, wherein
the one or more TCI state lists are a list of TCI states for each of the plurality of cells or a list of TCI states common to the plurality of cells.

3. The terminal according to claim 1 or 2, wherein
the parameter is a parameter on one cell of the plurality of cells or a parameter common to the plurality of cells.

4. The terminal according to any one of claims 1 to 3, wherein
the parameter is included in the one or more TCI states, or is associated with the one or more TCI states.

5. A radio communication method for a terminal, the radio communication method comprising:
receiving one or more transmission configuration indication (TCI) state lists for uplink in one or more cells of a plurality of cells and receiving an indication of one or more TCI states in the one or more TCI state lists; and
applying, to a part or all of the plurality of cells, at least one parameter of a pathloss reference signal and a transmission power control parameter based on the one or more TCI states.

6. A base station comprising:
a transmitting section that transmits one or more transmission configuration indication (TCI) state lists for uplink in one or more cells of a plurality of cells and that transmits an indication of one or more TCI states in the one or more TCI state lists; and
a control section that applies, to a part or all of the plurality of cells, at least one parameter of a pathloss reference signal and a transmission power control parameter based on the one or more TCI states.
